(19) **Europäisches Patentamt**
**European Patent Office**
**Office européen des brevets**

(11) **EP 4 496 410 A1**

(12) **EUROPEAN PATENT APPLICATION**
published in accordance with Art. 153(4) EPC

(43) Date of publication:
**22.01.2025 Bulletin 2025/04**

(21) Application number: **23794920.1**

(22) Date of filing: **29.03.2023**

(51) International Patent Classification (IPC):
**H04W 72/04** (2023.01)

(52) Cooperative Patent Classification (CPC):
**H04L 5/00; H04W 72/04; H04W 72/0446;
H04W 72/25; H04W 72/40**

(86) International application number:
**PCT/CN2023/084621**

(87) International publication number:
**WO 2023/207485 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210466656**

(71) Applicant: **Huawei Technologies Co., Ltd.
Shenzhen, Guangdong 518129 (CN)**

(72) Inventors:
• **HUANG, Haining**
**Shenzhen, Guangdong 518129 (CN)**
• **LI, Chao**
**Shenzhen, Guangdong 518129 (CN)**
• **LU, Lei**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TIME UNIT DETERMINATION METHOD AND COMMUNICATION APPARATUS**

(57) Embodiments of this application provide a time unit determining method and a communication apparatus. A network device indicates a time unit that is in a predefined time unit set and that belongs to an NR-V2X resource pool to a terminal device, and indicates a time unit that is in the NR-V2X resource pool and that belongs to an LTE-V2X resource pool to the terminal device, so that the terminal device can determine a time unit that is in the predefined time unit set and that belongs to both the NR-V2X resource pool and the LTE-V2X resource pool. According to the method, in a scenario in which LTE-V2X and NR-V2X coexist, conflicts between an NR-V2X resource and an LTE-V2X resource are reduced, thereby improving data transmission reliability.

FIG. 7

## Description

This application claims priority to Chinese Patent Application No. 202210466656.7, filed with the China National Intellectual Property Administration on April 29, 2022 and entitled "TIME UNIT DETERMINING METHOD AND COMMUNICATION APPARATUS", which is incorporated herein by reference in its entirety.

## TECHNICAL FIELD

Embodiments of this application relate to the communication field, and more specifically, to a time unit determining method and a communication apparatus.

## BACKGROUND

A cellular vehicle to everything (cellular vehicle to X, C-V2X) technology is a technology that provides a vehicle to everything service based on an existing cellular network infrastructure. C-V2X not only implements communication between devices through forwarding of a cellular network to implement high-speed and wide-coverage transmission, but also implements low-latency and high-reliability transmission through direct communication between devices. The C-V2X technology includes long term evolution (long term evolution, LTE) network V2X (LTE-V2X) and new radio (new radio, NR) network V2X (NR-V2X).

Currently, only a configuration manner of resource pools of the LTE-V2X and the NR-V2X for sidelink transmission is specified. However, with technology evolution, the LTE-V2X supports smooth evolution to the NR-V2X. Therefore, in a scenario in which the LTE-V2X and the NR-V2X coexist in an evolution process, how to reduce a conflict between an NR-V2X resource and an LTE-V2X resource becomes an urgent problem to be resolved.

## SUMMARY

Embodiments of this application provide a time unit determining method and a communication apparatus, to reduce a conflict between an NR-V2X resource and an LTE-V2X resource in a scenario in which LTE-V2X and NR-V2X coexist, so as to improve data transmission reli ability.

According to a first aspect, a time unit determining method is provided. The method may be performed by a terminal device, may be performed by a component (for example, a chip or a circuit) of the terminal device, may be performed by an NR-V2X module of the terminal device, may be performed by a component including an NR-V2X function, may be performed by a terminal device using an NR-V2X protocol, or may be performed by a component of the terminal device using the NR-V2X protocol. This is not limited. For ease of description, the following uses an example in which the method is performed by the terminal device for description.

The method may include: The terminal device receives first information, where the first information indicates a first time unit set, the first time unit set is a set of time units that are in a second time unit set and that belong to an NR-V2X resource pool, and the second time unit set is a predefined time unit set. The terminal device receives second information, where the second information indicates a time unit that is in the first time unit set and that belongs to an LTE-V2X resource pool. The terminal device determines a third time unit set based on the first information and the second information, where the third time unit set is a set of time units that belong to both the NR-V2X resource pool and the LTE-V2X resource pool.

In the foregoing method, in a process of evolution from LTE-V2X to NR-V2X, a resource that may be used for LTE sidelink transmission in the NR-V2X resource pool is specified. On a basis that the first information indicates a time domain resource in the NR-V2X resource pool, the second information is added to indicate a time domain resource shared by the NR-V2X and the LTE-V2X. Therefore, the terminal device may specify time domain resources that are dedicated for the NR-V2X and time domain resources that are shared with the LTE-V2X in the NR-V2X resource pool. The terminal device may perform NR-V2X transmission and LTE-V2X transmission on different time domain resources. In addition, the terminal device may avoid a conflict between time domain resources for the NR-V2X transmission and the LTE-V2X transmission, to improve transmission reliability.

With reference to the first aspect, in some implementations of the first aspect, the first information is a first bitmap, the second information is a second bitmap, the first bitmap indicates the first time unit set in a fourth time unit set, the fourth time unit set is a set of remaining time units other than a synchronization time unit of the NR-V2X and a reserved slot of the NR-V2X in the second time unit set, a length of the second bitmap is the same as a length of the first bitmap, or a length of the second bitmap is the same as a quantity of bits whose values are first status values in the first bitmap, and the first status value indicates that a corresponding time unit belongs to the first time unit set.

The length of the second bitmap is the same as the length of the first bitmap. The terminal device receives the first information and the second information, where the length of the first bitmap included in the first information is the same as the length of the second bitmap in the second information. The terminal device may determine, based on the two bitmaps, a time unit shared by the NR-V2X and the LTE-V2X. Implementation complexity of the terminal device is low. If the length of the first bitmap is different from the length of the second bitmap, the time unit shared by the NR-V2X and the LTE-V2X may fail to be flexibly configured by a network device or may fail to be preconfigured.

When the length of the second bitmap is the same as the quantity of bits whose values are the first status values in the first bitmap, in other words, a value of a bit in the first bitmap may indicate whether a corresponding time unit belongs to the NR-V2X resource pool, the second bitmap performs indication based on the first bitmap and only needs to indicate whether the time unit that belongs to the NR-V2X and that is indicated in the first bitmap belongs to the LTE-V2X resource pool. In other words, in this manner, the length of the second bitmap is less than the length of the first bitmap, so that overheads of indication information are reduced.

The foregoing method provides two specific manners of configuring the second bitmap. The network device may select one of the manners to configure the second bitmap based on an actual case.

According to a second aspect, a time unit determining method is provided. The method may be performed by a terminal device, may be performed by a component (for example, a chip or a circuit) of the terminal device, may be performed by an NR-V2X module of the terminal device, may be performed by a component including an NR-V2X function, may be performed by a terminal device using an NR-V2X protocol, or may be performed by a component of the terminal device using the NR-V2X protocol. This is not limited. For ease of description, the following uses an example in which the method is performed by the terminal device for description.

The method may include: The terminal device receives first information, where the first information indicates a first time unit set, the first time unit set is a set of time units that are in a second time unit set and that belong to an NR-V2X resource pool, and the second time unit set is a predefined time unit set. The terminal device obtains second information, where the second information indicates a sixth time unit set, the sixth time unit set is a set of time units that are in the second time unit set and that belong to an LTE-V2X resource pool. The terminal device determines a third time unit set based on the first information and the second information, where the third time unit set is a set of time units that belong to both the NR-V resource pool and the LTE-V resource pool.

Optionally, the method may alternatively be performed by the NR-V2X module of the terminal device or an NR-V2X chip of the terminal device. This is not specifically limited herein.

In the foregoing method, a resource that may be used for LTE sidelink transmission in the NR-V2X resource pool is specified. On a basis that the first information indicates a time domain resource in the NR-V2X resource pool, the second information is added to indicate a time domain resource in the LTE-V2X resource pool. Therefore, the terminal device may specify time domain resources that are dedicated for NR-V2X and time domain resources that are shared with LTE-V2X in the NR-V2X resource pool. The terminal device may perform LTE-V2X communication and NR-V2X communication on different time domain resources. In addition, the terminal device may avoid a conflict between time domain resources for NR-V2X transmission and LTE-V2X transmission, to improve transmission reliability.

With reference to the first aspect and the second aspect, in some implementations of the first aspect and the second aspect, the third time unit set includes a first time unit, and LTE sidelink information and NR sidelink information in the first time unit are transmitted in a frequency division multiplexing manner.

With reference to the first aspect and the second aspect, in some implementations of the first aspect and the second aspect, the method further includes: The terminal device receives first configuration information, where the first configuration information is used to enable or disable content indicated by the second information.

In the foregoing technical solution, configuration signaling for enabling or disabling whether to share a time domain resource with the LTE-V2X makes configuration of the NR-V2X resource pool more flexible.

Optionally, that the first configuration information is used to enable or disable content indicated by the second information may be further understood as that the first configuration information is used to enable or disable a co-channel coexistence function, or the first configuration information is used to enable or disable a function of sharing a resource between the LTE-V2X and the NR-V2X. In brief, disabling the second information indicates that the terminal device does not need to determine a third time unit, in other words, the terminal device does not need to consider a time unit that may be shared by the LTE-V2X and the NR-V2X during data transmission. Enabling the second information indicates that the terminal device needs to determine the third time unit, and the terminal device needs to consider the time unit that may be shared by the LTE-V2X and the NR-V2X during the data transmission.

With reference to the first aspect and the second aspect, in some implementations of the first aspect and the second aspect, the first time unit set is included in the fourth time unit set, and the fourth time unit set is the set of remaining time units other than the synchronization time unit of the NR-V2X and the reserved slot of the NR-V2X in the second time unit set. The sixth time unit is included in a fifth time unit set, the fifth time unit set is a set of remaining time units other than a synchronization time unit of the LTE-V2X and a reserved slot of the LTE-V2X in the second time unit set, and the sixth time unit set is the set of time units that are in the second time unit set and that belong to the LTE-V2X resource pool.

With reference to the first aspect and the second aspect, in some implementations of the first aspect and the second aspect, the fourth time unit set is the same as the fifth time unit set.

In the foregoing technical solution, when the fourth time unit set and the fifth time unit set are a same time unit set, time division multiplexing of a same time domain resource of the LTE-V2X and the NR-V2X can be implemented, or time domain resource sharing of the LTE-V2X and the NR-V2X can be implemented, so that spectrum resource utilization is improved, and the LTE-V2X can be gradually and smoothly phased out.

With reference to the first aspect and the second aspect, in some implementations of the first aspect and the second aspect, the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, and the third bitmap indicates the sixth time unit set in the fifth time unit set.

With reference to the first aspect and the second aspect, in some implementations of the first aspect and the second aspect, the synchronization time unit of the NR-V2X is the same as the synchronization time unit of the LTE-V2X in the second time unit set.

The synchronization time unit of the NR-V2X is configured to be the same as the synchronization time unit of the LTE-V2X, so that consistency between time units in the NR-V2X resource pool and the LTE-V2X resource pool can be improved. In other words, for an NR resource and an LTE resource, synchronization time units that are excluded from the predefined time unit set and that cannot be used for data transmission are the same, a remaining time unit that can be used as a time unit in the NR-V2X resource pool and a remaining time unit that can be used as a time unit in the LTE-V2X resource pool highly overlap with each other, to ensure feasibility of time division multiplexing of the LTE-V2X and the NR-V2X on a same time domain resource and feasibility of time domain resource sharing of the LTE-V2X and the NR-V2X. For example, based on the method, further, when the reserved time unit of the NR-V2X in the second time unit set and the reserved time unit of the LTE-V2X in the second time unit set are a same time unit, the configured fourth time unit set and fifth time unit set may be a same set. In this way, when the length of the first bitmap is configured to be an integer multiple of the length of the third bitmap, or the length of the third bitmap is configured to be an integer multiple of the length of the first bitmap, time division multiplexing of the LTE-V2X and the NR-V2X for a time domain resource can be implemented, so that spectrum resource utilization is improved.

With reference to the first aspect and the second aspect, in some implementations of the first aspect and the second aspect, the synchronization time unit of the NR-V2X in the second time unit set is included in the reserved time unit of the LTE-V2X in the second time unit set.

The method ensures the feasibility of time division multiplexing of the LTE-V2X and the NR-V2X on a same time domain resource and the feasibility of time domain resource sharing between the LTE-V2X and the NR-V2X. For example, in the method, the synchronization time unit of the NR-V2X in the second time unit set is included in the reserved time unit of the LTE-V2X in the second time unit set. In this implementation, when the reserved time unit of the NR-V2X in the second time unit set and the synchronization time unit of the LTE-V2X in the second time unit set are a same time unit, the configured fourth time unit set and fifth time unit set may be a same set. For another example, the synchronization time unit of the NR-V2X and the reserved time unit of the NR-V2X in the second time unit set are the same as the reserved time unit of the LTE-V2X in the second time unit set. In this implementation, when a quantity of synchronization time units of the LTE-V2X in the second time unit set is 0, the configured fourth time unit set and fifth time unit set may be a same set. In this way, when the length of the first bitmap is configured to be an integer multiple of the length of the third bitmap, or the length of the third bitmap is configured to be an integer multiple of the length of the first bitmap, time division multiplexing of the LTE-V2X and the NR-V2X for a time domain resource can be implemented, so that spectrum resource utilization is improved.

With reference to the first aspect and the second aspect, in some implementations of the first aspect and the second aspect, a quantity of reserved time units of the NR-V2X in the second time unit set is 0.

The foregoing solution can ensure that a spectrum resource is used in the NR-V2X resource pool to a maximum extent, and avoid a waste of the spectrum resource.

According to a third aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device sends first information, where the first information indicates a first time unit set, the first time unit set is a set of time units that are in a second time unit set and that belong to an NR-V2X resource pool, and the second time unit set is a predefined time unit set. The network device sends second information, where the second information indicates a time unit that is in the first time unit set and that belongs to an LTE-V2X resource pool. The first information and the second information are used to determine a third time unit set. The third time unit set is a set of time units that belong to both the NR-V2X resource pool and the LTE-V2X resource pool.

With reference to the third aspect, in some implementations of the third aspect, the first information is a first bitmap, the second information is a second bitmap, the first bitmap indicates the first time unit set in a fourth time unit set, the fourth time unit set is a set of remaining time units other than a synchronization time unit of NR-V2X and a reserved slot of the NR-V2X in the second time unit set, a length of the second bitmap is the same as a length of the first bitmap, or a length of the second bitmap is the same as a quantity of bits whose values are first status values in the first bitmap, and the first status value indicates that a corresponding time unit belongs to the first time unit set.

According to a fourth aspect, a communication method is provided. The method may be performed by a network device, or may be performed by a component (for example, a chip or a circuit) of the network device. This is not limited. For ease of description, the following uses an example in which the method is performed by the network device for description.

The method may include: The network device sends first information, where the first information indicates a first time unit set, the first time unit set is a set of time units that are in a second time unit set and that belong to an NR-V2X resource pool, and the second time unit set is a predefined time unit set. The network device sends second information, where the second information indicates a set of time units that are in the second time unit set and that belong to an LTE-V2X resource pool. The first information and the second information are used to determine a third time unit set. The third time unit set is a set of time units that belong to both the NR-V2X resource pool and the LTE-V2X resource pool.

With reference to the third aspect and the fourth aspect, in some implementations of the third aspect and the fourth aspect, the third time unit set includes a first time unit, and LTE sidelink information and NR sidelink information in the first time unit are transmitted in a frequency division multiplexing manner.

With reference to the third aspect and the fourth aspect, in some implementations of the third aspect and the fourth aspect, the method further includes: The network device sends first configuration information, where the first configuration information is used to enable or disable content indicated by the second information.

With reference to the third aspect and the fourth aspect, in some implementations of the third aspect and the fourth aspect, the first time unit set is included in the fourth time unit set, and the fourth time unit set is the set of remaining time units other than the synchronization time unit of the NR-V2X and the reserved slot of the NR-V2X in the second time unit set. The third time unit is included in a fifth time unit set, the fifth time unit set is a set of remaining time units other than a synchronization time unit of LTE-V2X and a reserved slot of the LTE-V2X in the second time unit set, and the third time unit set is the set of time units that are in the second time unit set and that belong to the LTE-V2X resource pool.

With reference to the third aspect and the fourth aspect, in some implementations of the third aspect and the fourth aspect, the synchronization time unit of the NR-V in the second time unit set is the same as the synchronization time unit of the LTE-V

With reference to the third aspect and the fourth aspect, in some implementations of the third aspect and the fourth aspect, the synchronization time unit of the NR-V in the second time unit set is included in the reserved time unit of the LTE-V in the second time unit set.

With reference to the third aspect and the fourth aspect, in some implementations of the third aspect and the fourth aspect, the fourth time unit set and the fifth time unit set are a same time unit set.

With reference to the third aspect and the fourth aspect, in some implementations of the third aspect and the fourth aspect, the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, the third bitmap indicates a sixth time unit set in the fifth time unit set, and the sixth time unit set is a set of time units that are in the second time unit set and that belong to the LTE-V2X resource pool.

With reference to the third aspect and the fourth aspect, in some implementations of the third aspect and the fourth aspect, a quantity of reserved time units of the NR-V2X in the second time unit set is 0.

It should be understood that the third aspect is a method on a network device side corresponding to the first aspect, and the fourth aspect is a method on the network device side corresponding to the second aspect. Related explanations, supplements, and descriptions of beneficial effects of the first aspect are also applicable to the third aspect, and related explanations, supplements, and descriptions of beneficial effects of the second aspect are also applicable to the fourth aspect. Details are not described herein.

According to a fifth aspect, a communication apparatus is provided. The apparatus is configured to perform the method according to the first aspect or the second aspect. Specifically, the apparatus may include units and/or modules, for example, a processing unit and/or a communication unit, configured to perform the method in the first aspect or the second aspect and any possible implementation of the first aspect or the second aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The apparatus is configured to perform the method in the third aspect or the fourth aspect. Specifically, the apparatus may include units and/or modules, for example, a processing unit and/or a communication unit, configured to perform the method in the third aspect or the fourth aspect and any possible implementation of the third aspect or the fourth aspect.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method in the first aspect or the second aspect and any possible implementation of the first aspect or the second aspect.

In an implementation, the apparatus is a terminal device.

In another implementation, the apparatus is a chip, a chip system, or a circuit used in a terminal device.

According to an eighth aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method in the third aspect or the fourth aspect and any possible implementation of the third aspect or the fourth aspect.

In an implementation, the apparatus is a network device.

In another implementation, the apparatus is a chip, a chip system, or a circuit used in a network device.

According to a ninth aspect, this application provides a processor, configured to perform the method in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a tenth aspect, a computer-readable storage medium is provided. The computer-readable storage medium stores program code executed by a device, and the program code is configured to perform the method in the first aspect, the second aspect, the third aspect, or the fourth aspect and any possible implementation of the first aspect, the second aspect, the third aspect, or the fourth aspect.

According to an eleventh aspect, a computer program product including instructions is provided. When the computer program product runs on a computer, the computer is enabled to perform the method in the first aspect, the second aspect, the third aspect, or the fourth aspect and any possible implementation of the first aspect, the second aspect, the third aspect, or the fourth aspect.

According to a twelfth aspect, a chip is provided. The chip includes a processor and a communication interface. The processor reads, through the communication interface, instructions stored in a memory, to perform the method in the first aspect, the second aspect, the third aspect, or the fourth aspect and any possible implementation of the first aspect, the second aspect, the third aspect, or the fourth aspect.

Optionally, in an implementation, the chip further includes the memory. The memory stores a computer program or instructions, the processor is configured to execute the computer program or the instructions stored in the memory, and when the computer program or the instructions are executed, the processor is configured to perform the method in the first aspect, the second aspect, the third aspect, or the fourth aspect and any possible implementation of the first aspect, the second aspect, the third aspect, or the fourth aspect.

According to a thirteenth aspect, a communication system is provided. The communication system includes the communication apparatuses shown in the seventh aspect and the eighth aspect.

## BRIEF DESCRIPTION OF DRAWINGS

FIG. 1 is a diagram of a communication system 100 to which an embodiment of this application is applicable;
FIG. 2 is a diagram of a communication system 200 to which an embodiment of this application is applicable;
FIG. 3 is a diagram of a communication system 300 to which an embodiment of this application is applicable;
FIG. 4 is a diagram of a communication system 400 to which an embodiment of this application is applicable;
FIG. 5 is a diagram of configuration of an NR-V2X resource pool;
FIG. 6 is a diagram of configuration of a synchronization slot;
FIG. 7 is a schematic flowchart of a sidelink resource pool configuration method according to this application;
FIG. 8 is a diagram of a bitmap indication according to this application;

FIG. 9 is a schematic flowchart of another sidelink resource pool configuration method according to this application;

FIG. 10 is a diagram of indications of a first bitmap and a third bitmap according to this application;

FIG. 11 is a diagram of frequency division multiplexing of an NR-V2X module and an LTE-V2X module of a terminal device in a slot jointly used by NR-V2X and LTE-V2X;

FIG. 12 is a diagram of time division multiplexing of a same slot set when a length of a first bitmap is 10 and a length of a third bitmap is 11;

FIG. 13 is a diagram of time division multiplexing of a same slot set when a length of a first bitmap is the same as a length of a third bitmap;

FIG. 14 is a diagram of time division multiplexing of a same slot set when a length of a first bitmap is 20 and a length of a third bitmap is 10;

FIG. 15 is a diagram of frequency division multiplexing of a synchronization resource of LTE-V2X and a synchronization resource of NR-V2X;

FIG. 16 is a block diagram of a communication apparatus 1000 according to this application; and

FIG. 17 is a diagram of a structure of a communication apparatus 1700 according to this application.

## DESCRIPTION OF EMBODIMENTS

The following describes the technical solutions of embodiments of this application with reference to the accompanying drawings.

The technical solutions provided in embodiments of this application may be applied to a link between a network device and a terminal device, or may be applied to a link between devices, for example, a device-to-device (device-to-device, D2D) link. The D2D link may also be referred to as a sidelink (sidelink. SL), and the sidelink may also be referred to as a side-link, a secondary link, or the like. In embodiments of this application, the D2D link, the side-link, or the secondary link is a link established between devices of a same type, and has a same meaning. The link between the devices of the same type may be a link between terminal devices, a link between network devices, a link between relay nodes, or the like. This is not limited in embodiments of this application. For the link between the terminal devices, there is a D2D link defined in Release (Release, Rel) 12/13 of the 3rd generation partnership project (3rd generation partnership project, 3GPP), and there is also a vehicle to everything (vehicle to everything, V2X) link defined by the 3GPP for an internet of vehicles. It should be understood that V2X specifically further includes vehicle-to-vehicle (vehicle-to-vehicle, V2V), vehicle-to-infrastructure (vehicle-to-infrastructure, V2I), vehicle-to-pedestrian (vehicle-to-pedestrian, V2P) direct communication, and vehicle-to-network (vehicle-to-network, V2N), or a vehicle-to-everything V2X link, including a V2X link in Rel-14/15. The V2X further includes an NR system-based V2X link in Rel-16 and later releases that are currently being studied by the 3GPP, and the like. The V2V is communication between vehicles. The V2P is communication between a vehicle and a person (including a pedestrian, a cyclist, a driver, or a passenger). The V2I is communication between a vehicle and an infrastructure, where the infrastructure is, for example, a roadside unit (roadside unit, RSU) or a network device. In addition, the V2N may be included in the V2I, and the V2N is communication between a vehicle and a network device. There are two types of RSUs: a terminal-type RSU and a base station-type RSU. Because the terminal-type RSU is deployed on a road side, and the terminal-type RSU is in a non-mobile state, mobility does not need to be considered. The base station-type RSU can provide timing synchronization and resource scheduling for a vehicle that communicates with the base station-type RSU.

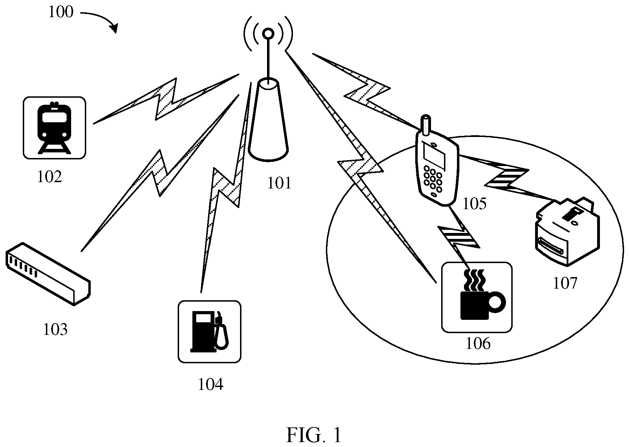

FIG. 1 is a diagram of a communication system 100 to which an embodiment of this application is applicable. As shown in FIG. 1, the communication system 100 may include at least one network device, such as a network device 101 shown in FIG. 1. The communication system 100 may further include at least one terminal device, such as terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device within the coverage. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may directly communicate with each other. For example, direct communication between the terminal devices may be implemented by using a V2X technology. As shown in the figure, direct communication may be performed between the terminal devices 105 and 106 and between the terminal devices 105 and 107 by using a D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 via the terminal device 105.

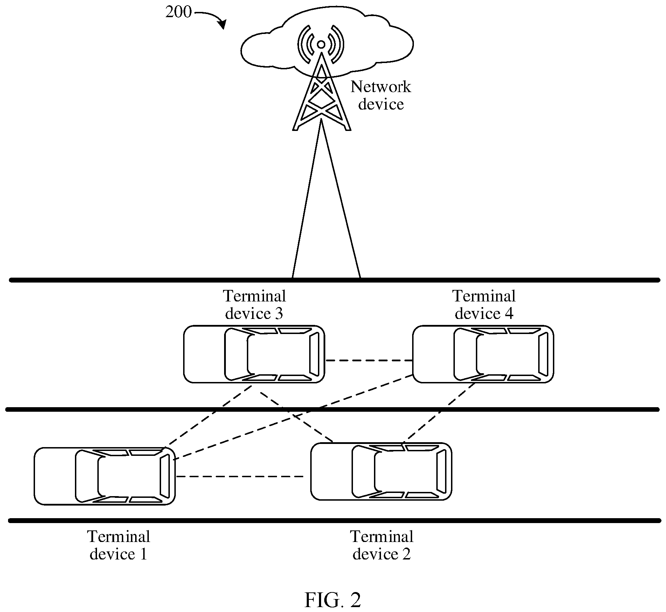

FIG. 2 is a diagram of a communication system 200 to which an embodiment of this application is applicable. FIG. 2 includes four terminal devices and one network device. Any two of the four terminal devices may directly communicate with each other, and a direct communication link between the two terminal devices is an SL. It should be understood that FIG. 1 and FIG. 2 show examples of one network device, a plurality of terminal devices, and communication links between communication devices. Optionally, the communication system 100 and the communication system 200 may include a plurality of network devices, and coverage of each network device may include another quantity of terminal devices, for example, more or fewer terminal devices. This is not limited in this application.

A plurality of antennas may be configured for the foregoing communication devices, such as the network device and the terminal device in FIG. 1 and FIG. 2. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. The network device may alternatively be a gNB or a transmission point (TRP or TP) in a 5G system, for example, an NR system, or one antenna panel or one group of antenna panels (including a plurality of antenna panels) of a base station in a 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

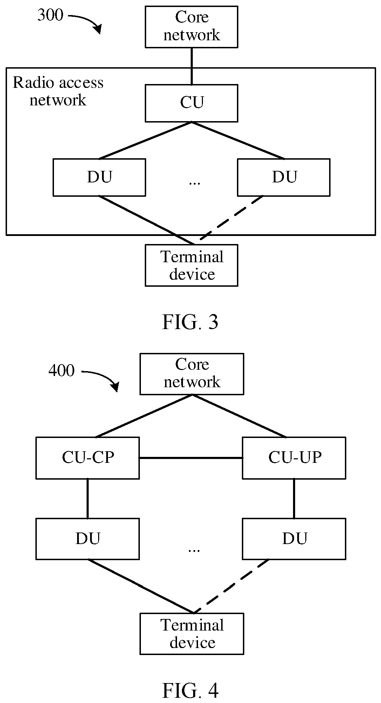

FIG. 3 is a diagram of a communication system 300 to which an embodiment of this application is applicable. As shown in FIG. 3, the communication system includes a core network (new core, CN) and a radio access network (radio access network, RAN). A network device (for example, a base station) in the RAN includes a baseband apparatus and a radio frequency apparatus. The baseband apparatus may be implemented by one or more nodes, and the radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. The network device in the RAN may include a central unit (CU) and a distributed unit (DU), and a plurality of DUs may be controlled by one CU in a centralized manner. The CU and the DU may be divided based on protocol layer functions of a wireless network thereof. For example, functions of a PDCP layer and a protocol layer above the PDCP layer are set on the CU, and functions of protocol layers below the PDCP layer, such as an RLC layer and a MAC layer, are set on the DU. It should be noted that division into the protocol layers is merely an example, and there may be other division of the protocol layers. The radio frequency apparatus may not be disposed in the DU but is disposed remotely from the DU, may be integrated into the DU, or a part of the radio frequency apparatus is disposed remotely from the DU and a remaining part is integrated into the DU. This is not limited in this application.

FIG. 4 is a diagram of a communication system 400 to which an embodiment of this application is applicable. In comparison with an architecture shown in FIG. 3, a control plane (CP) and a user plane (UP) of a CU may be separated and implemented by using different entities. The different entities are respectively a control plane CU entity (CU-CP entity) and a user plane CU entity (CU-UP entity). In the network architecture, signaling generated by the CU may be sent to a UE via a DU, or signaling generated by the UE may be sent to the CU via the DU. The DU may transparently transmit the signaling to the UE or the CU by directly encapsulating the signaling at a protocol layer without parsing the signaling. In the network architecture, the CU is classified as a network device on a RAN side. In addition, the CU may be classified as a network device on a CN side. This is not limited in this application.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal may be a mobile phone (mobile phone), a tablet computer (pad), a computer (for example, a laptop computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligently design daily wear. The wearable device is a portable device that can be directly worn on a body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be jointly used with other devices such as smartphones, such as various smart bands or smart jewelry used for monitoring physical signs. In addition, the terminal device may alternatively be a terminal device in an IoT system. An IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology. The terminal device may further include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

In actual deployment, a roadside communication unit (roadside unit, RSU) may be a terminal device, or the RSU may be a network device. The RSU is a facility deployed on a roadside to assist communication in vehicle-mounted delay-tolerant networking, is directly connected to a backbone network, and can perform wireless communication with vehicles. In comparison with vehicles in the vehicle-mounted delay-tolerant networking, the RSU has a better communication capability, wider coverage, and a higher transmission speed, and can simultaneously communicate with a plurality of vehicles. In addition, the RSU has large storage space, to store information and improve a communication probability. Therefore, a related RSU is deployed in a road traffic system, so that an existing onboard internet access problem can be effectively resolved, and a communication opportunity between vehicles can be greatly increased. A message is cached by the RSU, to implement efficient message transmission between vehicles.

Optionally, the wireless communication system 100 may further include another network entity such as a network controller or a mobility management entity. This is not limited in embodiments of this application.

To facilitate understanding of embodiments of this application, concepts and related procedures in this application are described first.

1. Time unit: One time unit (which may also be referred to as a time domain unit) may be one time domain symbol or several time domain symbols, one mini-slot (mini-slot), one slot (slot), or one subframe (subframe). Duration of one subframe in time domain may be 1 millisecond (ms), one slot may include seven or 14 time domain symbols, and one mini-slot may include at least one time domain symbol (for example, two time domain symbols, seven time domain symbols, 14 time domain symbols, or any quantity of symbols less than or equal to 14 time domain symbols). Sizes of the foregoing time units are merely listed for ease of understanding of the solutions in this application, and should not be understood as a limitation on this application. It may be understood that the sizes of the foregoing time units may be other values, and this is not limited in this application.

2. Sidelink (sidelink, SL): A communication link between UEs is defined as the sidelink.

3. Resource pool: The resource pool is a set of time-frequency resources used for sidelink transmission. Specifically, the resource pool is a set of time-frequency resources that are on the sidelink and that are used by a UE to transmit a physical sidelink shared channel (physical sidelink shared channel, PSSCH) or receive a PSSCH. One or more resource pools may be configured for one UE.

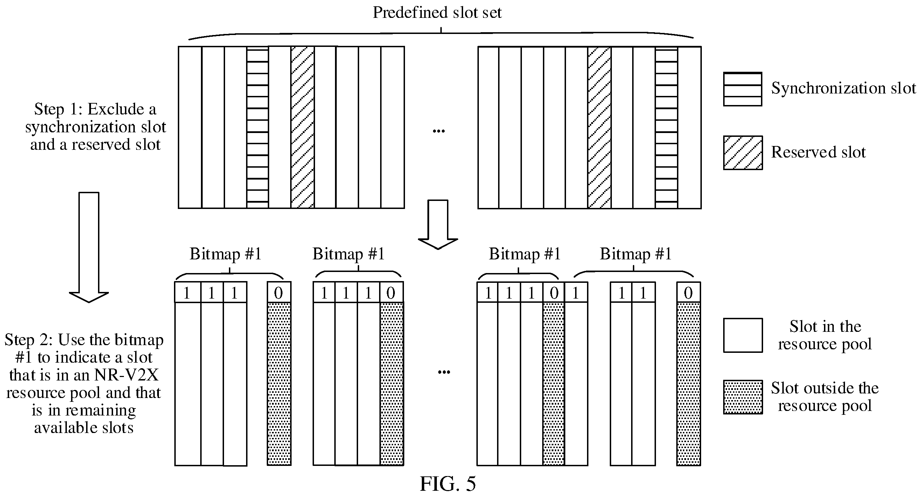

The following briefly describes a resource pool configuration method with reference to FIG. 5. The following configuration method is applicable to NR-V2X and LTE-V2X. The following uses configuration of a NR-V2X resource pool as an example.

Step 1: A network device excludes the following three types of slots from a predefined slot set.

It should be understood that the predefined slot set may be a slot set defined in a standard. For example, a length of the predefined slot set in time domain is 10240 milliseconds (ms), and a quantity of slots in the slot set at different subcarrier spacings (subcarrier spacings, SCSs) is shown in Table 1, where * represents multiplication.

**Table 1**

| $\mu$ | 0 | 1 | 2 | 3 |
|---|---|---|---|---|
| SCS | 15 kHz | 30 kHz | 60 kHz | 120 kHz |
| ms | 10240 | 10240 | 10240 | 10240 |
| Quantity of slots | $10240*2^0$ | $10240*2^1$ | $10240*2^2$ | $10240*2^3$ |

1. A synchronization slot of the NR-V2X is excluded. The synchronization slot of the NR-V2X is a slot configured to transmit a synchronization signal block (synchronization signal and PBCH block, SSB) of the NR-V2X.

Optionally, the synchronization slot of the NR-V2X may alternatively be a slot configured to transmit a synchronization signal or synchronization information of the NR-V2X. The descriptions in this application may be replaced with each other.

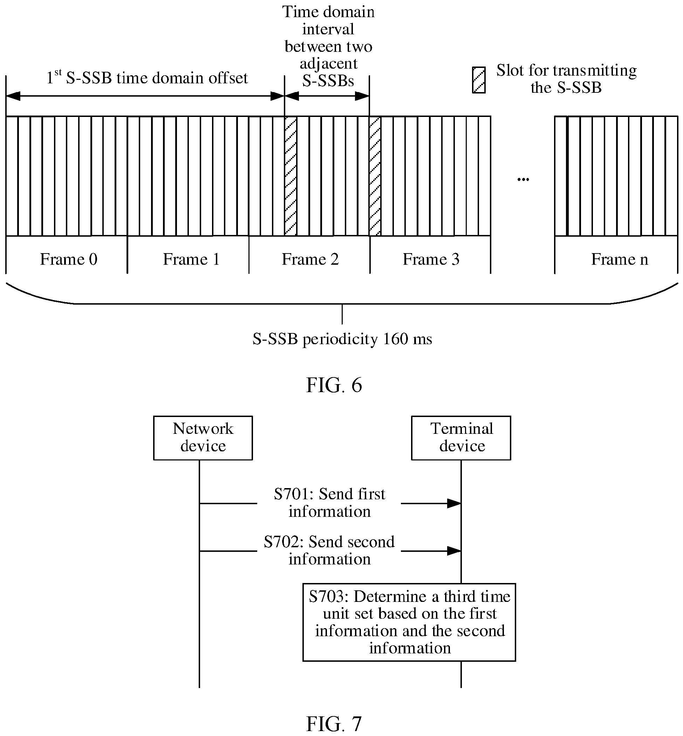

For example, as shown in FIG. 6, configuration of the synchronization slot is as follows: For all S-SSB (sidelink-SSB) subcarrier spacings, an S-SSB periodicity is 160 ms. In an S-SSB periodicity, repeated transmission of a plurality of S-SSBs is supported, and a quantity of transmitted S-SSBs is configurable. Table 2 shows a configurable quantity of S-SSBs in an S-SSB periodicity at different subcarriers. It should be understood that a slot for transmitting an S-SSB in an S-SSB periodicity is a synchronization slot. A frequency band range of FR1 is 450 MHz to 6 GHz, and a frequency band range of FR2 is 24.25 GHz to 52.6 GHz. The two frequency band ranges jointly form a 5G frequency band.

Table 2

| Frequency range | Subcarrier spacing | Quantity of S-SSBs transmitted in one S-SSB periodicity |
|---|---|---|
| FR1 | 15 kHz | 1 |
| | 30 kHz | 1 or 2 |
| | 60 kHz | 1, 2, or 4 |
| FR2 | 60 kHz | 1, 2, 4, 8, 16, or 32 |
| | 120 kHz | 1, 2, 4, 8, 16, 32, or 64 |

As shown in FIG. 6, an offset of a 1st SSB in an S-SSB periodicity relative to a start location of the S-SSB periodicity is referred to as a 1st S-SSB time domain offset. The offset is in a unit of one slot, and a value range of the offset is [0, 1279]. In addition, a time interval between two adjacent S-SSBs in one S-SSB periodicity is referred to as a time domain interval between the two adjacent S-SSBs. The time interval is also in a unit of one slot, and a value range of the time interval is [0, 639].

2. A slot that is not used for NR-V2X sidelink transmission is excluded. The slot that is not used for the NR-V2X sidelink transmission is a slot configured for NR-V2X uplink transmission and a slot configured for NR-V2X downlink transmission.

3. A reserved slot of the NR-V2X is excluded. A manner of determining the reserved slot is not described herein, and is described in detail in step 2.

Step 2: After the foregoing three types of slots are excluded from the predefined slot set, where remaining slots are referred to as an available slot set of the NR-V2X, the network device indicates, in a form of a bitmap #1 (bitmap #1), a slot that is in the NR-V2X resource pool and that is in the available slot set of the NR-V2X to a terminal device, where a time-frequency resource set including these slots is referred to as the NR-V2X resource pool.

A length $L_{bitmap\#1}$ of the bitmap #1 is configured by a higher layer of the network device, and $L_{bitmap\#1}$ is an integer greater than 1. For example, $L_{bitmap\#1}$ may be configured by using a higher-layer parameter sl-TimeResource. A value of this parameter is an integer ranging from 10 to 160. In other words, the length of $L_{bitmap\#1}$ may be an integer ranging from 10 to 160.

Specifically, the bitmap #1 may indicate, by using values "0" and "1", whether each slot in the available slot set of the NR-V2X is a slot in the NR-V2X resource pool. As shown in FIG. 5, $L_{bitmap\#1}$ is 4, and the bitmap #1 is specifically 1110. In other words, the network device indicates that the first three slots in every four slots in available slots of the NR-V2X are slots in the NR-V2X resource pool in ascending order of slot indexes, and a last slot in every four slots does not belong to the NR-V2X resource pool. For example, if the available slots of the NR-V2X are a slot 1 to a slot 12, that the bitmap #1 is 1110 indicates that the slots 4, 8, and 12 in the slot 1 to the slot 12 are slots outside the NR-V2X resource pool, and all remaining slots are slots in the NR-V2X resource pool.

The configuration of the resource pool is described in detail above with reference to FIG. 5. It can be learned that the synchronization slot and the slot that is not used for sidelink transmission in step 1 are easily excluded based on respective purposes. A manner of determining the reserved slot is provided herein.

After the synchronization slot and the slot that is not used for sidelink transmission are excluded from $10240 \times 2^\mu$ slots in step 1, remaining slots are denoted as ( $l_0, l_1, \cdots, l_{(10240 \times 2^\mu - N_{S_{SSB}} - N_{nonSL} - 1)}$ ) in ascending order of slot indexes, where $N_{S_{SSB}}$ represents a quantity of synchronization slots of the NR-V2X, and $N_{nonSL}$ represents the slot that is not used for the NR-V2X sidelink transmission. In this case, if a slot $l_r$ ($0 \leq r < 10240 \times 2^\mu - N_{SSSB} - N_{nonSL}$) satisfies Formula (1), the slot is a reserved slot of the NR-V2X.

$$r = \left\lfloor \frac{m * (10240 \times 2^\mu - N_{S_{SSB}} - N_{nonSL})}{N_{reserved}} \right\rfloor \quad (1)$$

$m = 0, 1, \cdots, N_{reserved} - 1$, $N_{reserved} = (10240 \times 2^\mu - N_{SSSB} - N_{nonSL}) mod(L_{bitmap\#1})$, and a mod operation represents a modulo operation. It can be learned from Formula (1) that, a finally determined quantity of reserved slots is $N_{reserved}$. Therefore, the reserved slots may also be understood as some slots that are excluded from $10240 \times 2^\mu - N_{SSSB} - N_{nonSL}$ to be exactly divided by $L_{bitmap\#1}$.

It can be learned that, in the foregoing method, only configuration manners of resource pools corresponding to the LTE-V2X and the NR-V2X are specified. Because the LTE-V2X supports smooth evolution to the NR-V2X, there is a scenario in which the LTE-V2X and the NR-V2X coexist in an evolution process. How to consider a resource that may be occupied by the LTE-V2X when an NR-V2X resource is determined becomes an urgent problem to be resolved.

In view of this, this application provides a method, to effectively resolve the foregoing technical problem. The following describes in detail the method provided in this application.

FIG. 7 is a schematic flowchart of a resource pool configuration method according to this application. The method may include the following steps.

S701: A network device sends first information to a terminal device. Correspondingly, the terminal device receives the first information from the network device. The first information indicates a first time unit set, the first time unit set is a set of time units that are in a second time unit set and that belong to an NR-V2X resource pool, and the second time unit set is a predefined time unit set.

For example, a length of the second time unit set in time domain is 10240 ms.

It should be understood that the set of time units that are in the second time unit set and that belong to the NR-V2X resource pool is a set of all time units that are in the second time unit set and that are included in the NR-V2X resource pool. Therefore, for example, the first information may indicate the NR-V2X resource pool in the second time unit set; the first information may indicate the set of time units included in the NR-V2X resource pool in the second time unit set; the first information may indicate a configuration parameter of the NR-V2X resource pool in the second time unit set; the first information may indicate a set of time-frequency resources used for NR-V2X transmission in the second time unit set; or the first indication information may indicate a set of time units used for NR-V2X transmission in the second time unit set. The NR-V2X herein may be NR-V2X of Release R18, or may be NR-V2X after Release R18, or may be NR-V2X of Release R16. This is not limited in this application.

Optionally, the first information is a first bitmap. The first bitmap indicates the first time unit set in a fourth time unit set. The fourth time unit set is a set of remaining time units other than a synchronization time unit of the NR-V2X, a reserved time unit of the NR-V2X, and a time unit that is not used for NR-V2X sidelink transmission in the second time unit set. In this application, the fourth time unit set may also be referred to as an available time unit set of the NR-V2X. After excluding, from a predefined time unit set, the time unit that cannot be used for the NR-V2X transmission, the terminal device determines the fourth time unit set, that is, the available time unit set of the NR-V2X, and then determines, based on the first information, for example, the first bitmap, a time unit that is in the fourth time unit set and that belongs to the NR-V2X resource pool.

For ease of understanding, in this embodiment, an example in which the NR-V2X resource pool is configured in an intelligent transportation system (intelligent transportation system, ITS) spectrum is used for description. The ITS spectrum does not include a time-frequency resource that is not used for sidelink transmission. In this case, in the spectrum, the fourth time unit set is a set of remaining time units other than the synchronization time unit of the NR-V2X and the reserved time unit of the NR-V2X in the second time unit set. In the following descriptions of this embodiment, the available time unit set of the NR-V2X is the fourth time unit set defined in the ITS spectrum.

It can be learned from the descriptions in FIG. 5 that a length of the first bitmap is configured by the higher layer of the network device. In this manner, the length of the first bitmap needs to be first determined, and then a quantity of reserved slots can be determined based on the length of the first bitmap. In this case, there may be a large quantity of determined reserved slots, and consequently, spectrum utilization is low. Therefore, this application provides a method for determining the first bitmap. For example, the length of the second time unit set in time domain is 10240 ms. When a subcarrier spacing is 15 kHz, the second time unit set includes 10240 slots. In the ITS system, a quantity of synchronization slots of the NR-V2X in the second time unit set is x1, a quantity of reserved slots of the NR-V2X is y in the second time unit set, and impact of a synchronization slot (a slot configured to transmit LTE-V2X synchronization information) of the LTE-V2X is not considered. In this case, a quantity of slots in the available time unit set of the NR-V2X is 10240-x1-y. It can be learned from the descriptions in FIG. 5 that the quantity of slots in the available time unit set of the NR-V2X is an integer multiple of the length of the first bitmap. Therefore, the length $L_{bitmap}^{NR}$ of the first bitmap satisfies Formula (2):

$$mod\left(\frac{10240 - x1 - y}{L_{bitmap}^{NR}}\right) = 0 \quad (2)$$

It may be understood that a reason why a remainder after the mod operation in Formula (2) is 0 is that whether a slot in the available time unit set of the NR-V2X is a slot of the NR-V2X resource pool needs to be indicated by using an integer quantity of first bitmaps. Therefore, a quantity of slots in the available time unit set of the NR-V2X needs to be exactly divided by a length of a first bit.

It should be understood that, in some cases, a value of the quantity y of reserved slots may not satisfy the foregoing formula. For example, if the value of y makes 10240-x1-y a prime number (with a divisor of 1 or the prime number), such y cannot be taken.

Based on Formula (2), the network device may select an appropriate minimum value of y as much as possible, and $L_{bitmap}^{NR}$ corresponding to the value of y. For example, the network device may first select the value of y, and then determine one or more possible values of $L_{bitmap}^{NR}$ according to Formula (2). If none of the values of $L_{bitmap}^{NR}$ satisfies Formula (2), the network device may reselect a value of y for determining $L_{bitmap}^{NR}$. For example, the network device selects a value of y and a value of $L_{bitmap}^{NR}$ to determine whether Formula (2) is satisfied. For example, the network device traverses all possible values of $L_{bitmap}^{NR}$, and selects one value of $L_{bitmap}^{NR}$ from at least one value of $L_{bitmap}^{NR}$ that minimizes a value of $mod\left(\frac{10240 - x1}{L_{bitmap}^{NR}}\right)$.

Optionally, y=0. Because the reserved slot cannot be configured as a slot for the NR-V2X transmission, the reserved slot is not used for the NR-V2X transmission. In other words, this part of resources are not used, causing a waste of a spectrum. When y=0, it can be ensured that a spectrum resource is used in the NR-V2X resource pool to a maximum extent, and avoid a waste of the spectrum resource.

Optionally, based on the foregoing example, the impact of the synchronization slot of the LTE-V2X is considered, in other words, the synchronization slot of the LTE-V2X cannot be used for NR sidelink information transmission. Assuming that a quantity of synchronization slots of the LTE-V2X in the second time unit set is x2, the available time unit set of the NR-V2X may include 10240-x1-x2-y slots. In this case, the length of the first bitmap satisfies Formula (3):

$$mod\left(\frac{10240 - x1 - x2 - y}{L_{bitmap}^{NR}}\right) = 0 \quad (3)$$

It should be noted that, when the NR-V2X resource pool is configured, if the impact of the synchronization slot of the LTE-V2X is considered, the network device may indicate the synchronization slot of the LTE-V2X to the terminal device, or an LTE-V2X module of the terminal device may transparently transmit indication information including the synchronization slot of the LTE-V2X to an NR-V2X module of the terminal device.

In this application, transparent transmission may also be understood as transmission or interaction between modules of the terminal device. It is assumed that the impact of the synchronization slot of the LTE-V2X is not considered, and a same time domain resource is used for transmission of the NR-V2X module of the terminal device and transmission of synchronization information of the LTE-V2X module. A type of a possible conflict includes: Sending of the synchronization information of the LTE-V2X conflicts with receiving of the NR-V2X transmission; sending of the synchronization information of the LTE-V2X conflicts with sending of the NR-V2X transmission; receiving of the synchronization information of the LTE-V2X conflicts with receiving of the NR-V2X transmission; and receiving of the synchronization information of the LTE-V2X conflicts with sending of the NR-V2X transmission. Therefore, when the first bitmap is determined by using the method, a same time domain resource is not used for the transmission of the NR-V2X module of the terminal device and the transmission of the synchronization information of the LTE-V2X module, to avoid the foregoing conflicts and ensure reliability of data transmission between the NR-V2X module and the LTE-V2X module.

Optionally, if slot sets corresponding to x1 and y include a slot set corresponding to x2, 10240-x1-x2-y in Formula (3) needs to be replaced with 10240-x1-y. In other words, a time domain resource that cannot be configured as the NR-V2X resource pool in the second time unit set is a union set of the slot set corresponding to x1 and the slot set corresponding to y.

S702: The network device sends second information to the terminal device. The second information indicates a time unit that is in the first time unit set and that belongs to an LTE-V2X resource pool. Correspondingly, the terminal device receives the second information from the network device.

Optionally, two sending actions of the network device in S701 and S702 may be replaced with one sending action, in other words, the network device sends the first information and the second information to the terminal device simultaneously. Correspondingly, the terminal device receives the first information and the second information from the network device.

Optionally, the first information and the second information each may be indicated by one piece of signaling in RRC signaling, master information block (master information block, MIB) signaling, system information block (system information block, SIB) signaling, a common message, an abstract syntax notation one (abstract syntax notation one, ASGN.1), or a system message, or the first information and the second information may be carried by one piece of signaling in the foregoing signaling.

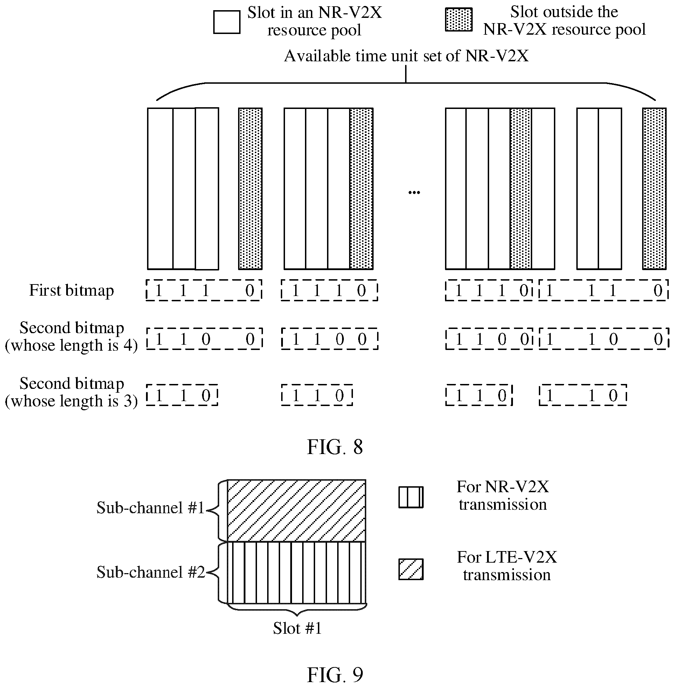

Optionally, the second information is a second bitmap, a length of the second bitmap is the same as the length of the first bitmap, or a length of the second bitmap is the same as a quantity of bits whose values are first status values in the first bitmap, and the first status value indicates that a corresponding time unit belongs to the first time unit set. For example, based on FIG. 5, as shown in FIG. 8, the first bitmap is the bitmap #1 in FIG. 5, and the bitmap #1 is 1110. If it is indicated that the first two slots in every four consecutive slots in the available time unit set of the NR-V2X belong to the LTE-V2X resource pool in ascending order of slot indexes, the second bitmap may be 1100 (that is, the length of the second bitmap is 4); or the second bitmap may be 110 (that is, the length of the second bitmap is the same as a quantity of bits whose values are 1 in the first bitmap, and the length of the second bitmap is 3). 1 in the second bitmap indicates that a time unit corresponding to the bit belongs to the LTE-V2X resource pool, and 0 indicates that a time unit corresponding to the bit does not belong to the LTE-V2X resource pool.

Optionally, the network device may further send first configuration information to the terminal device, where the first configuration information is used to enable or disable content indicated by the second information. That the first configuration information is used to enable or disable content indicated by the second information may be further understood as that the first configuration information is used to enable or disable an indication of the second information; the first configuration information is used to enable or disable a function indicated by the second information; the first configuration information is used to enable or disable a co-channel coexistence function between the LTE-V2X and the NR-V2X; or the first configuration information is used to enable or disable a function of sharing a resource between the LTE-V2X and the NR-V2X. In brief, disabling the second information indicates that the terminal device does not need to determine a third time unit, in other words, the terminal device does not need to consider a time unit that may be shared by the LTE-V2X and the NR-V2X during data transmission. Enabling the second information indicates that the terminal device needs to determine the third time unit, and the terminal device needs to consider the time unit that may be shared by the LTE-V2X and the NR-V2X during the data transmission. It can be learned that configuration of the first configuration information makes the configuration of the NR-V2X resource pool more flexible.

It should be understood that when the network device enables the second information, the terminal device performs S703; or when the network device disables the second information, the terminal device ignores the second information and does not perform S703.

S703: The terminal device determines a third time unit set based on the first information and the second information. A time unit in the third time unit set belongs to both the LTE-V2X resource pool and the NR-V2X resource pool.

It should be understood that a time unit other than the third time unit set in the first time unit set is a dedicated time unit for the NR-V2X transmission.

In a possible implementation, the terminal device may determine, based on the first information and the second information, time units that are time units dedicated for the NR-V2X transmission and time units that are time units shared by the NR-V2X transmission and LTE-V2X transmission in the first time unit set. The time unit shared by the NR-V2X and the LTE-V2X may be understood as a time unit for co-channel coexistence between the NR-V2X and the LTE-V2X, or a time unit jointly used by the NR-V2X and the LTE-V2X.

The co-channel coexistence between the LTE-V2X and the NR-V2X means that the NR-V2X resource pool includes a resource dedicated for the NR-V2X transmission and a resource that can be used for the LTE-V2X transmission or the NR-V2X transmission. In other words, the co-channel coexistence between the LTE-V2X and the NR-V2X means that the NR-V2X resource pool includes a resource that can only be used for the NR-V2X transmission and a resource that can be used for the LTE-V2X transmission or the NR-V2X transmission. In other words, the co-channel coexistence between the LTE-V2X and the NR-V2X means that the NR-V2X resource pool and the LTE-V2X resource pool overlap in time domain and/or frequency domain. The co-channel coexistence between the LTE-V2X and the NR-V2X may alternatively be understood as dynamic coexistence of the NR-V2X and the LTE-V2X. That a shared time-frequency resource is occupied by the NR-V2X transmission or occupied by the LTE-V2X transmission may be dynamically determined. The co-channel coexistence between the LTE-V2X and the NR-V2X may alternatively be understood as that the NR-V2X resource pool includes a time-frequency resource shared with the LTE-V2X. In other words, the co-channel coexistence between the LTE-V2X and the NR-V2X may alternatively be understood as that the NR-V2X includes the time-frequency resource shared with the LTE-V2X, and does not include the resource dedicated for the NR-V2X transmission. The co-channel coexistence between the LTE-V2X and the NR-V2X may alternatively be understood as that resources in the NR-V2X resource pool include two types: one is a resource that can be used for the NR-V2X transmission, and the other is a resource that can be used for both the NR-V2X transmission and the LTE-V2X transmission. The co-channel coexistence between the LTE-V2X and the NR-V2X may alternatively be understood as time division multiplexing (time domain division, TDM) or frequency division multiplexing (frequency domain division, FDM) of the NR-V2X resource pool and the LTE-V2X resource pool. It should be noted that in a time unit jointly used by the NR-V2X and the LTE-V2X, a resource used for the NR-V2X transmission cannot affect the LTE-V2X transmission. Therefore, when a resource is determined for the NR-V2X transmission, a resource used for the LTE-V2X transmission needs to be excluded.

Optionally, in the time unit jointly used by the NR-V2X and the LTE-V2X, the NR-V2X transmission and the LTE-V2X transmission may support frequency division multiplexing. In other words, the NR-V2X transmission and the LTE-V2X transmission may be frequency division multiplexed on a jointly used time domain resource. For example, as shown in FIG. 9, a slot #1 is a jointly used slot. If the LTE-V2X module of the terminal device needs to perform transmission on a sub-channel #1 of a slot, the NR-V2X module of the terminal device cannot use this resource, but the NR-V2X module of the terminal device may perform transmission on a sub-channel #2 of the slot, in other words, frequency division multiplexing is performed in the slot #1.

Optionally, in a resource set in which the NR-V2X transmission and the LTE-V2X transmission coexist, the NR-V2X transmission and the LTE-V2X transmission may not support frequency division multiplexing. In other words, one time domain resource can be occupied only by the NR-V2X transmission or the LTE-V2X transmission, and cannot be occupied by both the NR-V2X transmission and the LTE-V2X transmission.

In the foregoing method, a specific method for determining, in a scenario in which the NR-V2X and the LTE-V2X coexist, a resource that may exist in the NR-V2X resource pool and that is used for LTE sidelink transmission is specified. On a basis that the first information indicates the NR-V2X resource pool, the second information is added to indicate a time domain resource shared by the NR-V2X and the LTE-V2X. Therefore, the terminal device that may use an NR-V2X technology may specify time domain resources that are dedicated for the NR-V2X and time domain resources that are shared with the LTE-V2X in the NR-V2X resource pool. The terminal device may obtain, on different time domain resources in different manners, time domain resources for transmitting a hybrid automatic repeat request (hybrid automatic repeat request, HARQ) or data. For example, the terminal device may avoid a conflict between the NR-V2X transmission and the LTE-V2X transmission on the time domain resource, to improve transmission reliability.

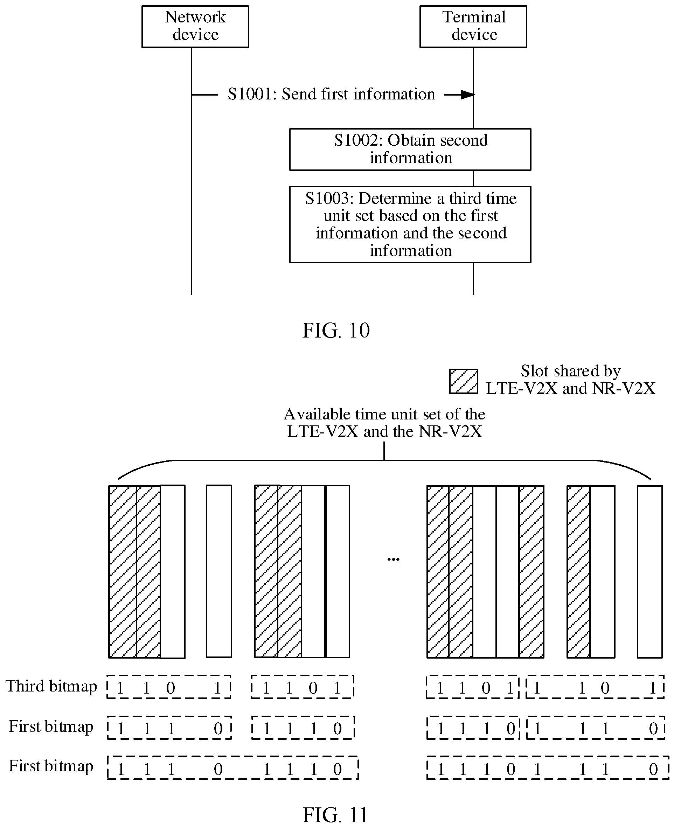

In addition to the method shown in FIG. 7, this application further provides another method for indicating a third time unit set. The following describes the method in detail with reference to FIG. 10.

FIG. 10 is a schematic flowchart of another resource pool configuration method according to this application. The method may include the following steps.

S1001: A network device sends first information to a terminal device. The first information indicates a first time unit set, the first time unit set is a set of time units that are in a second time unit set and that belong to an NR-V2X resource pool, and the second time unit set is a predefined time unit set. Correspondingly, the terminal device receives the first information from the network device.

For S1001, refer to the descriptions in S701. Details are not described herein again.

S1002: The terminal device obtains second information. The second information indicates a sixth time unit set, and the sixth time unit set is a set of time units that are in the second time unit set and that belong to an LTE-V2X resource pool.

It should be understood that the set of time units that are in the second time unit set and that belong to the LTE-V2X resource pool is a set of all time units that are in the second time unit set and that are included in the LTE-V2X resource pool. Therefore, for example, the second information may indicate the LTE-V2X resource pool in the second time unit set; the second information indicates a set of time units included in the LTE-V2X resource pool in the second time unit set; the second information indicates a configuration parameter of the LTE-V2X resource pool in the second time unit set; the second information indicates a set of time-frequency resources used for LTE-V2X transmission in the second time unit set; or the second indication information indicates a set of time units used for LTE-V2X transmission in the second time unit set.

Optionally, the first information and the second information each may be indicated by one piece of signaling in RRC signaling, MIB signaling, SIB signaling, a common message, an ASGN. 1, or a system message, or the first information and the second information may be carried by one piece of signaling in the foregoing signaling.

Optionally, the terminal device may obtain the second information in the following two manners: The terminal device may receive the second information from the network device, or an LTE-V2X module of the terminal device transparently transmits the second information to an NR-V2X module of the terminal device.

Optionally, if the second information is configured by the network device for the terminal device, the network device may further send first configuration information to the terminal device, where the first configuration information is used to enable or disable content indicated by the second information. That the first configuration information is used to enable or disable content indicated by the second information may be further understood as that the first configuration information is used to enable or disable an indication of the second information; the first configuration information is used to enable or disable a function indicated by the second information; the first configuration information is used to enable or disable a co-channel coexistence function; or the first configuration information is used to enable or disable a function of sharing a resource between LTE-V2X and NR-V2X. In brief, disabling the second information indicates that the terminal device does not need to determine a third time unit, in other words, the terminal device does not need to consider a time unit that may be shared by the LTE-V2X and the NR-V2X during data transmission. Enabling the second information indicates that the terminal device needs to determine the third time unit, and the terminal device needs to consider the time unit that may be shared by the LTE-V2X and the NR-V2X during the data transmission.

It should be understood that when the network device enables the second information, the terminal device performs S1003; or when the network device disables the second information, the terminal device ignores the second information and does not perform S1003.

S1003: The terminal device determines a third time unit set based on the first information and the second information. A time unit in the third time unit set belongs to both the LTE-V2X resource pool and the NR-V2X resource pool.

Specifically, the terminal device determines, based on the first information, the time unit that belongs to the NR-V2X resource pool, and determines, based on the second information, the time unit that belongs to the LTE-V2X resource pool. In this case, the terminal device may determine time domain resources that are dedicated for the NR-V2X and time domain resources that are shared by the NR-V2X and the LTE-V2X in the NR-V2X resource pool. For beneficial effects of the method, refer to the descriptions in FIG. 7. Details are not described herein again. Optionally, the first information is a first bitmap. For details about the first bitmap, refer to the descriptions in S701. Details are not described herein again.

Optionally, the second information is a third bitmap, the third bitmap indicates the sixth time unit set in a fifth time unit set, and the fifth time unit set is a set of remaining time units other than a synchronization time unit of the LTE-V2X, a reserved slot of the LTE-V2X, and a time unit that is not used for LTE-V2X sidelink transmission in the second time unit set. The time unit that is not used for the LTE-V2X sidelink transmission is configured, and may be understood as a time unit that is configured for LTE-V2X uplink transmission and NR-V2X downlink transmission. In this application, the fifth time unit set may be referred to as an available time unit set of the LTE-V2X. The available time unit set of the LTE-V2X may also be understood as a time unit set that may be configured for the LTE-V2X transmission.

For ease of understanding, in this embodiment, an example in which the LTE-V2X resource pool and the NR-V2X resource pool are configured in an ITS spectrum is still used for description. The ITS spectrum does not include a time-frequency resource that is not used for sidelink transmission. In this case, in the spectrum, the fourth time unit set is a set of remaining time units other than a synchronization time unit of the NR-V2X and a reserved time unit of the NR-V2X in the second time unit set. In the following descriptions of this embodiment, an available time unit set of the NR-V2X is the fourth time unit set defined in the ITS spectrum. The fifth time unit set is a set of remaining time units other than the synchronization time unit of the LTE-V2X and a reserved time unit of the LTE-V2X in the second time unit set. In the following descriptions of this embodiment, the available time unit set of the LTE-V2X is the fifth time unit set defined in the ITS spectrum.

Optionally, the available time unit set of the LTE-V2X is equal to the available time unit set of the NR-V2X, that is, the fourth time unit set and the fifth time unit set are a same time unit set.

Optionally, a length of the first bitmap is equal to a length of the third bitmap. For example, based on FIG. 5, when the available time unit set of the LTE-V2X is equal to the available time unit set of the NR-V2X, as shown in FIG. 1, the first bitmap may be 1110, and the third bitmap may be 1101. The terminal device may determine, based on the first bitmap and the third bitmap, that the first two slots in every four slots in the available time unit set of the NR-V2X belong to both the LTE-V2X resource pool and the NR-V2X resource pool in ascending order of slot indexes.

Optionally, the length of the first bitmap is N (where N≥2 and N is an integer) times the length of the third bitmap. For example, based on FIG. 5, when the available time unit set of the LTE-V2X is equal to the available time unit set of the NR-V2X, as shown in FIG. 11, the length of the first bitmap is twice the length of the third bitmap. Specifically, the first bitmap may be 11101110, and the third bitmap may be 1101. The terminal device may determine, based on the first bitmap and the third bitmap, that the first two slots in every four slots in the available time unit set of the NR-V2X belong to both the LTE-V2X resource pool and the NR-V2X resource pool in ascending order of slot indexes.

It should be noted that when all bits in the first bitmap are configured to be 1, the network device may not consider the length of the first bitmap.

It can be learned that, when the available time unit set of the LTE-V2X is equal to the available time unit set of the NR-V2X, the two types of configuration of the length of the first bitmap and the length of the third bitmap provided above are used to implement time domain resource sharing between the LTE-V2X and the NR-V2X and improve spectrum resource utilization, so that the LTE-V2X can be gradually and smoothly phased out.

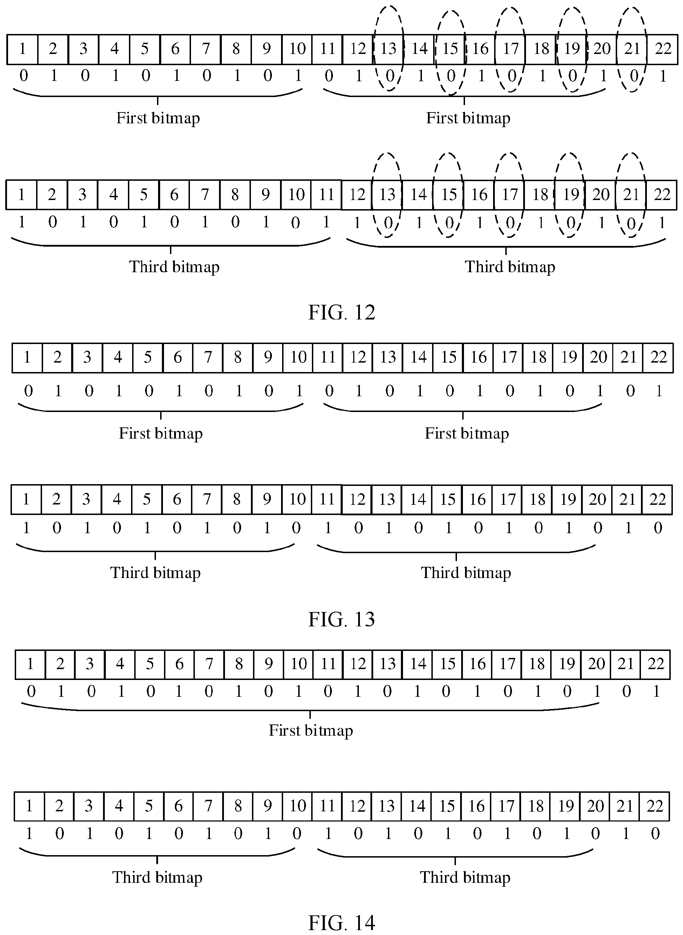

In addition, when the available time unit set of the LTE-V2X is equal to the available time unit set of the NR-V2X, time division multiplexing of time domain resources of the LTE-V2X and the NR-V2X can be further implemented based on the two types of configuration of the length of the first bitmap and the length of the third bitmap provided above, so that spectrum resource utilization is improved. A reason is specifically described herein with reference to FIG. 12. As shown in FIG. 12, the available time unit set of the LTE-V2X is the same as the available time unit set of the NR-V2X, and is denoted as a slot set X herein. The slot X includes a slot 1 to a slot 22, and the slot 1 is a start slot of the slot set X. The LTE-V2X and the NR-V2X are configured in a time division multiplexing mode. It is assumed herein that the first bitmap is 0101010101 (that is, the length of the first bitmap is 10), and the third bitmap is 10101010101 (that is, the length of the third bitmap is 11). It can be learned that, because the length of the first bitmap is different from the length of the third bitmap, many slots (for example, the slots 13, 15, and 17) do not belong to the NR-V2X resource pool or the LTE-V2X resource pool, causing a great waste of a spectrum resource. For example, as shown in FIG. 13, when the lengths of the foregoing two bitmaps are the same, assuming that the first bitmap is 0101010101 (that is, the length of the first bitmap is 10), and the third bitmap is 1010101010 (that is, the length of the third bitmap is also 10), time division multiplexing can be kept for the LTE-V2X and the NR-V2X on a time domain resource, so that a waste of the spectrum resource is avoided.

It should be understood that, when the available time unit set of the LTE-V2X is the same as the available time unit set of the NR-V2X, if the length of the first bitmap is N (N≥2 and N is an integer) times the length of the third bitmap, or the length of the third bitmap is N times the length of the first bitmap, spectrum resource utilization can also be improved. For example, as shown in FIG. 14, when the length of the first bitmap is twice the length of the third bitmap, assuming that the first bitmap is 01010101010101010101 (that is, the length of the first bitmap is 20), and the third bitmap is 1010101010 (that is, the length of the third bitmap is also 10), time division multiplexing can be kept for the LTE-V2X and the NR-V2X on a time domain resource, so that a waste of the spectrum resource is avoided.

Optionally, it is assumed that a time domain resource in the NR-V2X resource pool and a time domain resource in the LTE-V2X resource pool are time division multiplexed, the length of the third bitmap is N (where N≥2 and N is an integer) times the length of the first bitmap, and the length of the first bitmap is an even number. For example, the spectrum is evenly allocated to the NR-V2X and the LTE-V2X for time division multiplexing, and time domain resources available for the NR-V2X and the LTE-V2X include eight slots. In this case, the first bitmap may be 10101010, and the third bitmap may be 0101 or 01.

Optionally, it is assumed that a time domain resource in the NR-V2X resource pool and a time domain resource in the LTE-V2X resource pool are time division multiplexed, the length of the third bitmap is N times the length of the first bitmap, the first bitmap is an odd number, and a value of a first half of the third bitmap is the same as a value of a second half of the third bitmap. For example, the spectrum is evenly allocated to the NR-V2X and the LTE-V2X for time division multiplexing as much as possible, and time domain resources available for the NR-V2X and the LTE-V2X include 10 slots. The third bitmap may be 1010110101 (where the values of the first half and the second half are both 10101), and the first bitmap may be 01010.

It can be learned from above that when the available time unit set of the LTE-V2X is the same as the available time unit set of the NR-V2X, spectrum resource utilization can be improved based on co-channel coexistence configuration or time division multiplexing configuration. For example, during actual configuration, the network device may ensure, in the following several manners, feasibility of time division multiplexing of the LTE-V2X and the NR-V2X on an available time domain resource, or ensure feasibility of the configuration of the NR-V2X resource pool that coexists with the LTE-V2X on a common channel.

Manner 1: The synchronization time unit of the NR-V2X in the second time unit set and the synchronization time unit of the LTE-V2X in the second time unit set are a same time unit.

Manner 1 may also be understood as frequency division multiplexing configuration of a synchronization resource of the NR-V2X and a synchronization resource of the LTE-V2X. To be specific, the NR-V2X and the LTE-V2X use different frequency domain resources in a same synchronization time unit.

For example, the synchronization time unit of the NR-V2X and the synchronization time unit of the LTE-V2X have a same S-SSB periodicity in the second time unit set, and a 1st S-SSB time domain offset in each S-SSB periodicity is also the same.

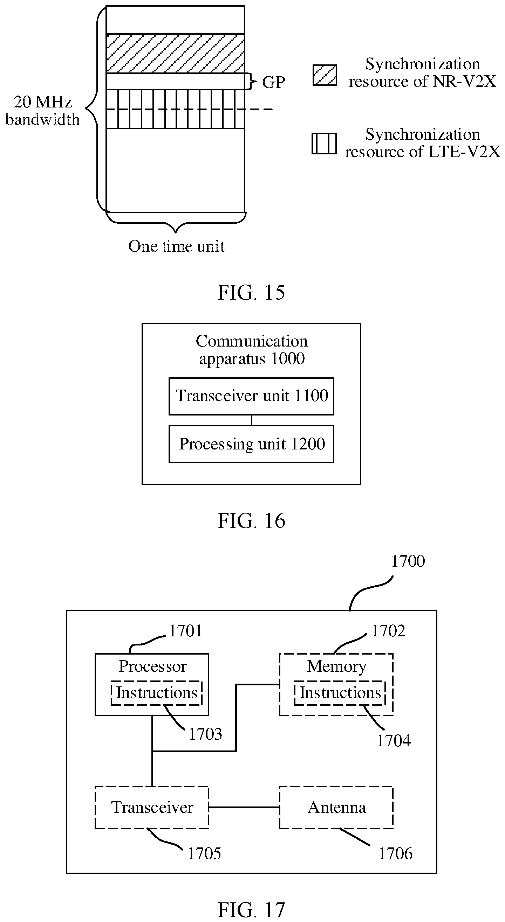

Optionally, there is a guard period (guard period, GP) between frequency domain resources used by the NR-V2X and the LTE-V2X in a same time unit. As shown in FIG. 15, a 20 MHz bandwidth is used as an example. Synchronization time units of the NR-V2X and the LTE-V2X occupy a same time unit. The synchronization resource of the LTE-V2X uses a center frequency as a central line, and the synchronization resource of the NR-V2X is on one side or two sides of the synchronization resource of the LTE-V and keeps a requirement for the GP. Existence of the GP can avoid mutual impact of signals between frequency bands.

It may be understood that when the network device configures the resource pool based on the NR-V2X in Manner 1, provided that the reserved time unit of the NR-V2X in the second time unit set and the reserved time unit of the LTE-V2X in the second time unit set are a same time unit, the available time unit set of the NR-V2X and the available time unit set of the LTE-V2X may be a same set.

Manner 2: The synchronization time unit of the NR-V2X in the second time unit set is included in the reserved time unit of the LTE-V2X in the second time unit set.

In an implementation, Manner 2 may be that the synchronization time unit of the NR-V2X in the second time unit set is equal to the reserved time unit of the LTE-V2X in the second time unit set. In this implementation, provided that the reserved time unit of the NR-V2X in the second time unit set and the synchronization time unit of the LTE-V2X in the second time unit set are a same time unit, the available time unit set of the NR-V2X and the available time unit set of the LTE-V2X may be a same set.

In another implementation, Manner 2 may be that the synchronization time unit of the NR-V2X and the reserved time unit of the NR-V2X in the second time unit set are equal to the reserved time unit of the LTE-V2X in the second time unit set. In this implementation, provided that the synchronization time unit of the LTE-V2X in the second time unit set is 0, the available time unit set of the NR-V2X and the available time unit set of the LTE-V2X may be a same set.

In Manner 1 or Manner 2, the available time unit set of the NR-V2X and the available time unit set of the LTE-V2X may be configured as a same time unit set, and then the length of the first bitmap and the length of the third bitmap are configured to be a same length or have a multiple relationship. In this way, a time domain resource on the spectrum can be flexibly and effectively configured, and a resource pool including the NR-V2X that coexists with the LTE-V2X on a common channel is configured. This improves spectrum utilization efficiency and enables the LTE-V2X to be gradually and smoothly phased out.

With reference to Manner 1 and Manner 2, the following uses an example to describe how to determine the length of the first bitmap and the length of the third bitmap when the available time unit set of the NR-V2X is the same as the available time unit set of the LTE-V2X. For ease of description, the following uses an example in which the second time unit set includes 10240 slots for description.

Example 1

Based on Manner 1, a quantity of synchronization slots of the NR-V2X in the second time unit set is x1, and a quantity of reserved time slots of the NR-V2X in the second time unit set is y. In this case, when the length of the first bitmap is the same as the length of the third bitmap and both the lengths are $L_{bitmap}$, $L_{bitmap}$ satisfies the following relationship:

$$mod\left(\frac{10240 - x1 - y}{L_{bitmap}}\right) = 0$$

Optionally, when y=0, $L_{bitmap}$ satisfies the following relationship:

$$mod\left(\frac{10240 - x1}{L_{bitmap}}\right) = 0$$

Example 2

Based on Manner 2, the synchronization time unit of the NR-V2X in the second time unit set is equal to the reserved slot of the LTE-V2X in the second time unit set, a quantity of synchronization slots of the NR-V2X in the second time unit set is x1, a quantity y of reserved slots of the NR-V2X in the second time unit set is equal to 0, and a quantity x2 of synchronization slots of the LTE-V2X is equal to 0. In this case, when the length of the first bitmap is the same as the length of the third bitmap and both the lengths are $L_{bitmap}$, $L_{bitmap}$ satisfies the following relationship:

$$mod\left(\frac{10240 - x1}{L_{bitmap}}\right) = 0$$

The foregoing describes in detail the resource pool configuration method provided in this application, and the following describes communication apparatuses provided in this application.

FIG. 16 is a block diagram of a communication apparatus 1000 according to this application.

In a possible design, the communication apparatus 1000 includes a transceiver unit 1100 and a processing unit 1200. The communication apparatus 1000 may implement the steps or the procedures performed by the terminal device in the foregoing method embodiments. For example, the communication apparatus 1000 may be a terminal device, or a chip or a circuit configured in the terminal device. The transceiver unit 1100 is configured to perform operations related to receiving and sending of the terminal device in the foregoing method embodiments, and the processing unit 1200 is configured to perform operations related to processing on the terminal device in the foregoing method embodiments.

In a possible implementation, the transceiver unit 1100 is configured to receive first information, where the first information indicates a first time unit set, the first time unit set is a set of time units that are in a second time unit set and that belong to an NR-V2X resource pool, and the second time unit set is a predefined time unit set. The transceiver unit 1100 is further configured to receive second information, where the second information indicates a time unit that is in the first time unit set and that belongs to an LTE-V2X resource pool. The processing unit 1200 is configured to determine a third time unit set based on the first information and the second information, where a time unit in the third time unit set belongs to both the NR-V2X resource pool and the LTE-V2X resource pool.

Optionally, the first information is a first bitmap, and the second information is a second bitmap. For descriptions of the first bitmap and the second bitmap, refer to the descriptions in the embodiment corresponding to FIG. 7. Details are not described herein again.

Optionally, the transceiver unit 1100 is further configured to receive first configuration information, where the first configuration information is used to enable or disable content indicated by the second information.

In another possible implementation, the transceiver unit 1100 is configured to receive first information, where the first information indicates a first time unit set, the first time unit set is a set of time units that are in a second time unit set and that belong to an NR-V2X resource pool, and the second time unit set is a predefined time unit set. The processing unit 1200 is configured to obtain second information, where the second information indicates a sixth time unit set, and the sixth time unit set is a set of time units that are in the second time unit set and that belong to an LTE-V2X resource pool. The processing unit 1200 is further configured to determine a third time unit set based on the first information and the second information, where the third time unit set is a set of time units that belong to both the NR-V2X resource pool and the LTE-V2X resource pool.

Optionally, the first information is a first bitmap, and the second information is a second bitmap. For descriptions of the first bitmap and the second bitmap, refer to the descriptions in the embodiment corresponding to FIG. 10. Details are not described herein again.

Optionally, the transceiver unit 1100 is further configured to receive first configuration information, where the first configuration information is used to enable or disable content indicated by the second information.

Optionally, in an implementation in which the communication apparatus 1000 is the terminal device in the method embodiments, the transceiver unit 1100 may be a receiver. The receiver and the transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs operations and/or processing performed by the terminal device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the terminal device, the transceiver unit 1100 may be a communication interface or an interface circuit. The processing unit 1200 may be a processor or a microprocessor integrated on the chip or the integrated circuit. This is not limited herein.

In another possible design, the communication apparatus 1000 includes a processing unit 1200 and a transceiver unit 1100. The communication apparatus 1000 may implement the steps or the procedures performed by the network device in the foregoing method embodiments. For example, the communication apparatus 1000 may be a network device, or a chip or a circuit configured in the network device. The transceiver unit 1100 is configured to perform operations related to receiving and sending of the network device in the foregoing method embodiments, and the processing unit 1200 is configured to perform operations related to processing on the network device in the foregoing method embodiments.

In a possible implementation, the transceiver unit 1100 is configured to send first information, where the first information indicates a first time unit set, the first time unit set is a set of time units that are in a second time unit set and that belong to an NR-V2X resource pool, and the second time unit set is a predefined time unit set. The transceiver unit 1100 is further configured to send second information, where the second information indicates a time unit that is in the first time unit set and that belongs to an LTE-V2X resource pool, the first information and the second information determine a third time unit set, and the third time unit set is a set of time units that belong to both the NR-V2X resource pool and the LTE-V2X resource pool.

Optionally, the first information is a first bitmap, and the second information is a second bitmap. For descriptions of the first bitmap and the second bitmap, refer to the descriptions in the embodiment corresponding to FIG. 7. Details are not described herein again.

Optionally, the transceiver unit 1100 is further configured to send first configuration information, where the first configuration information is used to enable or disable content indicated by the second information.

In another possible implementation, the transceiver unit 1100 is configured to send first information, where the first information indicates a first time unit set, the first time unit set is a set of time units that are in a second time unit set and that belong to an NR-V2X resource pool, and the second time unit set is a predefined time unit set. The transceiver unit 1100 is configured to send second information, where the second information indicates a third time unit set, the third time unit set is a set of time units that are in the second time unit set and that belong to an LTE-V resource pool, the first information and the second information are used to determine a fourth time unit set, and the fourth time unit set is a set of time units that belong to both the NR-V2X resource pool and the LTE-V2X resource pool.

Optionally, the first information is a first bitmap, and the second information is a second bitmap. For descriptions of the first bitmap and the second bitmap, refer to the descriptions in the embodiment corresponding to FIG. 10. Details are not described herein again.

Optionally, the transceiver unit 1100 is further configured to send first configuration information, where the first configuration information is used to enable or disable content indicated by the second information.

Optionally, in an implementation in which the communication apparatus 1000 is the network device in the method embodiments, the transceiver unit 1100 may be a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs the operations and/or the processing performed by the network device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the network device, the transceiver unit 1100 may be a communication interface or an interface circuit. The processing unit 1200 may be a processor or a microprocessor integrated on the chip or the integrated circuit. This is not limited herein.

FIG. 17 shows an apparatus 1700 according to an embodiment of this application. The apparatus shown in FIG. 17 may be an implementation of a hardware circuit of the apparatus shown in FIG. 16. The communication apparatus is applicable to the foregoing flowcharts, and performs functions of the terminal device or the network device in the foregoing method embodiments. For ease of description, FIG. 17 shows only main components of the communication apparatus.

The communication apparatus 1700 may be a terminal device, and can implement functions of the terminal device or the network device in the methods provided in embodiments of this application. Alternatively, the communication apparatus 1700 may be an apparatus that can support the terminal device or the network device in implementing a corresponding function in the methods provided in embodiments of this application. The communication apparatus 1700 may be a chip system. In embodiments of this application, the chip system may include a chip, or may include a chip and another discrete component. For specific functions, refer to descriptions of the foregoing method embodiments.

The communication apparatus 1700 includes one or more processors 1710, configured to implement or support the communication apparatus 1700 in implementing functions of the terminal device or the network device in the methods provided in embodiments of this application. For details, refer to detailed descriptions in the method examples. Details are not described herein. The processor 1710 may also be referred to as a processing unit or a processing module, and may implement a specific control function. The processor 1710 may be a general-purpose processor, a dedicated processor, or the like. For example, the apparatus includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1700, execute a software program, and/or process data. Different processors may be independent components, or may be integrated into one or more processors, for example, integrated into one or more application-specific integrated circuits. It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

Optionally, the communication apparatus 1700 includes one or more memories 1720, configured to store instructions 1740. The instructions may be run on the processor 1710, to enable the communication apparatus 1700 to perform the methods described in the foregoing method embodiments. The memory 1720 is coupled to the processor 1710. The coupling in this embodiment of this application may be an indirect coupling or a communication connection between apparatuses, units, or modules in an electrical form, a mechanical form, or another form, and is used for information exchange between the apparatuses, the units, or the modules. The processor 1710 may operate in collaboration with the memory 1720. At least one of the at least one memory may be included in the processor. It should be noted that the memory 1720 is not necessary, and therefore is shown by using dashed lines in FIG. 17.

Optionally, the memory 1720 may further store data. The processor and the memory may be separately disposed, or may be integrated together. In this embodiment of this application, the memory 1720 may be a non-volatile memory such as a hard disk drive (hard disk drive, HDD) or a solid-state drive (solid-state drive, SSD), or may be a volatile memory (volatile memory) such as a random-access memory (random-access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or a storage medium of any other form well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 1700 may include instructions 1730 (which may also be referred to as code or programs sometimes). The instructions 1730 may be run on the processor, to enable the communication apparatus 1700 to perform the method described in the foregoing embodiments. The processor 1710 may store data.

Optionally, the communication apparatus 1700 may further include a transceiver 1750 and an antenna 1706. The transceiver 1750 may be referred to as a transceiver unit, a transceiver module, a transceiver machine, a transceiver circuit, a transceiver, an input/output interface, or the like, and is configured to implement a transceiver function of the communication apparatus 1700 through the antenna 1706.

The processor 1710 and the transceiver 1750 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1700 may include more or fewer components, some components are integrated, or some components are split. The components may be implemented by hardware, software, or a combination of software and hardware.

In addition, this application further provides a computer-readable storage medium. The computer-readable storage medium stores computer instructions, and when the computer instructions are run on a computer, the operations and/or the procedures performed by the terminal device or the network device in the method embodiments of this application are performed.

This application further provides a computer program product. The computer program product includes computer program code or instructions, and when the computer program code or the instructions are run on a computer, the operations and/or the procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, to perform the operations and/or the processing performed by the terminal device or the network device in any method embodiment.

Further, the chip may include a communication interface. The communication interface may be an input/output interface, an interface circuit, or the like. Further, the chip may include a memory.

In addition, this application further provides a communication system, including a terminal device and a network device in embodiments of this application.

It should be understood that the processor in this embodiment of this application may be an integrated circuit chip, and has a signal processing capability. In an implementation process, steps in the foregoing method embodiments can be implemented by using a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module of an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification is intended to include, but is not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes any medium that can store program code, such as a USB flash drive, a removable hard disk drive, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that, ordinal numbers such as "first" and "second" in embodiments of this application are used to distinguish between a plurality of objects, but are not intended to limit sizes, content, a sequence, a time sequence, priorities, importance degrees, or the like of the plurality of objects. For example, first information and second information do not indicate a difference in an information amount, content, a priority, an importance degree, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof means one item (piece) or a plurality of items (pieces), in other words, any combination of these items, including any combination of singular items (pieces) or plural items (pieces). For example, at least one of a, b, or c may represent a, b, c, a and b, a and c, b and c, or a, b, and c.

It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A time unit determining method, comprising:

   receiving first information, wherein the first information indicates a first time unit set, the first time unit set is a set of time units that are in a second time unit set and that belong to a new radio network vehicle to everything NR-V2X resource pool, and the second time unit set is a predefined time unit set;
   receiving second information, wherein the second information indicates a time unit that is in the first time unit set and that belongs to a long term evolution network vehicle to everything LTE-V2X resource pool; and
   determining a third time unit set based on the first information and the second information, wherein a time unit in the third time unit set belongs to both the NR-V2X resource pool and the LTE-V2X resource pool.

2. The method according to claim 1, wherein

   the first time unit set is comprised in a fourth time unit set, and the fourth time unit set is a set of remaining time units other than a synchronization time unit of NR-V2X and a reserved slot of the NR-V2X in the second time unit set; and
   a sixth time unit set is comprised in a fifth time unit set, the fifth time unit set is a set of remaining time units other than a synchronization time unit of LTE-V2X and a reserved slot of the LTE-V2X in the second time unit set, and the sixth time unit set is a set of time units that are in the second time unit set and that belong to the LTE-V2X resource pool.

3. The method according to claim 2, wherein
   the first information is a first bitmap, the second information is a second bitmap, the first bitmap indicates the first time unit set in the fourth time unit set, a length of the second bitmap is the same as a length of the first bitmap, or a length of the second bitmap is the same as a quantity of bits whose values are first status values in the first bitmap, and the first status value indicates that a corresponding time unit belongs to the first time unit set.

4. The method according to claim 2 or 3, wherein the fourth time unit set is the same as the fifth time unit set.

5. The method according to any one of claims 2 to 4, wherein
   the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, the third bitmap indicates the sixth time unit set in the fifth time unit set, and the sixth time unit set is a set of time units that are in the second time unit set and that belong to the LTE-V2X resource pool.

6. The method according to any one of claims 1 to 5, wherein the third time unit set comprises a first time unit, and LTE sidelink information and NR sidelink information in the first time unit are transmitted in a frequency division multiplexing manner.

7. A time unit determining method, comprising:

   sending first information, wherein the first information indicates a first time unit set, the first time unit set is a set of time units that are in a second time unit set and that belong to a new radio network vehicle to everything NR-V2X resource pool, and the second time unit set is a predefined time unit set;
   sending second information, wherein the second information indicates a time unit that is in the first time unit set and that belongs to a long term evolution network vehicle to everything LTE-V2X resource pool, the first information and the second information are used to determine a third time unit set, and a time unit in the third time unit set belongs to both the NR-V2X resource pool and the LTE-V2X resource pool.

8. The method according to claim 7, wherein

the first time unit set is comprised in a fourth time unit set, and the fourth time unit set is a set of remaining time units other than a synchronization time unit of NR-V2X and a reserved slot of the NR-V2X in the second time unit set; and

a sixth time unit is comprised in a fifth time unit set, the fifth time unit set is a set of remaining time units other than a synchronization time unit of LTE-V2X and a reserved slot of the LTE-V2X in the second time unit set, and the sixth time unit set is a set of time units that are in the second time unit set and that belong to the LTE-V2X resource pool.

9. The method according to claim 8, wherein

the first information is a first bitmap, the second information is a second bitmap, the first bitmap indicates the first time unit set in the fourth time unit set,

a length of the second bitmap is the same as a length of the first bitmap, or a length of the second bitmap is the same as a quantity of bits whose values are first status values in the first bitmap, and the first status value indicates that a corresponding time unit belongs to the first time unit set.

10. The method according to claim 8 or 9, wherein the fourth time unit set and the fifth time unit set are a same time unit set.

11. The method according to any one of claims 8 to 10, wherein the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, and the third bitmap indicates the sixth time unit set in the fifth time unit set.

12. The method according to any one of claims 7 to 11, wherein the third time unit set comprises a first time unit, and LTE sidelink information and NR sidelink information in the first time unit are transmitted in a frequency division multiplexing manner.

13. A communication apparatus, comprising:

a receiving unit, configured to receive first information, wherein the first information indicates a first time unit set, the first time unit set is a set of time units that are in a second time unit set and that belong to a new radio network vehicle to everything NR-V2X resource pool, and the second time unit set is a predefined time unit set, wherein the receiving unit is further configured to receive second information, wherein the second information indicates a time unit that is in the first time unit set and that belongs to a long term evolution network vehicle to everything LTE-V2X resource pool; and

a processing unit, configured to determine a third time unit set based on the first information and the second information, wherein a time unit in the third time unit set belongs to both the NR-V2X resource pool and the LTE-V2X resource pool.

14. The apparatus according to claim 13, wherein

the first time unit set is comprised in a fourth time unit set, and the fourth time unit set is a set of remaining time units other than a synchronization time unit of NR-V2X and a reserved slot of the NR-V2X in the second time unit set; and

a sixth time unit set is comprised in a fifth time unit set, the fifth time unit set is a set of remaining time units other than a synchronization time unit of LTE-V2X and a reserved slot of the LTE-V2X in the second time unit set, and the sixth time unit set is a set of time units that are in the second time unit set and that belong to the LTE-V2X resource pool.

15. The apparatus according to claim 14, wherein

the first information is a first bitmap, the second information is a second bitmap, the first bitmap indicates the first time unit set in the fourth time unit set,

a length of the second bitmap is the same as a length of the first bitmap, or a length of the second bitmap is the same as a quantity of bits whose values are first status values in the first bitmap, and the first status value indicates that a corresponding time unit belongs to the first time unit set.

16. The apparatus according to claim 14 or 15, wherein the fourth time unit set and the fifth time unit set are a same time unit set.

17. The apparatus according to any one of claims 14 to 16, wherein
the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, and the third bitmap indicates the sixth time unit set in the fifth time unit set.

18. The apparatus according to any one of claims 13 to 17, wherein the third time unit set comprises a first time unit, and LTE sidelink information and NR sidelink information in the first time unit are transmitted in a frequency division multiplexing manner.

19. A communication apparatus, comprising:

a sending unit, configured to send first information, wherein the first information indicates a first time unit set, the first time unit set is a set of time units that are in a second time unit set and that belong to a new radio network vehicle to everything NR-V2X resource pool, and the second time unit set is a predefined time unit set, wherein the sending unit is further configured to send second information, wherein the second information indicates a time unit that is in the first time unit set and that belongs to a long term evolution network vehicle to everything LTE-V2X resource pool, the first information and the second information are used to determine a third time unit set, and a time unit in the third time unit set belongs to both the NR-V2X resource pool and the LTE-V2X resource pool.

20. The apparatus according to claim 19, wherein

the first time unit set is comprised in a fourth time unit set, and the fourth time unit set is a set of remaining time units other than a synchronization time unit of NR-V2X and a reserved slot of the NR-V2X in the second time unit set; and
a sixth time unit is comprised in a fifth time unit set, the fifth time unit set is a set of remaining time units other than a synchronization time unit of LTE-V2X and a reserved slot of the LTE-V2X in the second time unit set, and the sixth time unit set is a set of time units that are in the second time unit set and that belong to the LTE-V2X resource pool.

21. The apparatus according to claim 20, wherein

the first information is a first bitmap, the second information is a second bitmap, the first bitmap indicates the first time unit set in the fourth time unit set,
a length of the second bitmap is the same as a length of the first bitmap, or a length of the second bitmap is the same as a quantity of bits whose values are first status values in the first bitmap, and the first status value indicates that a corresponding time unit belongs to the first time unit set.

22. The apparatus according to claim 20 or 21, wherein the fourth time unit set and the fifth time unit set are a same time unit set.

23. The apparatus according to any one of claims 20 to 22, wherein
the first information is the first bitmap, the length of the first bitmap is an integer multiple of a length of a third bitmap, or a length of a third bitmap is an integer multiple of the length of the first bitmap, the first bitmap indicates the first time unit set in the fourth time unit set, and the third bitmap indicates the sixth time unit set in the fifth time unit set.

24. The apparatus according to any one of claims 19 to 23, wherein the third time unit set comprises a first time unit, and LTE sidelink information and NR sidelink information in the first time unit are transmitted in a frequency division multiplexing manner.

25. A communication apparatus, wherein the communication apparatus comprises at least one processor and at least one memory, the at least one memory is configured to store a computer program or instructions, and the at least one processor is configured to execute the computer program or the instructions in the memory, to perform the method according to any one of claims 1 to 6, or perform the method according to any one of claims 7 to 12.

26. A computer-readable storage medium, wherein the computer-readable storage medium stores computer instructions, and when the computer instructions are run on a computer, the method according to any one of claims 1 to 6 is performed, or the method according to any one of claims 7 to 12 is performed.

27. A computer program product, wherein the computer program product comprises computer program code, and when the computer program code is run on a computer, the method according to any one of claims 1 to 6 is performed, or the method according to any one of claims 7 to 12 is performed.

FIG. 1

FIG. 2

FIG. 3

FIG. 4

Predefined slot set

EP 4 496 410 A1

Step 1: Exclude a
synchronization slot
and a reserved slot

$\cdots$

Synchronization slot

Reserved slot

Bitmap #1    Bitmap #1         Bitmap #1    Bitmap #1

| 1 | 1 | 1 | | 0 |   | 1 | 1 | 1 | 0 |     | 1 | 1 | 1 | 0 | 1 | | 1 | 1 | | 0 |

$\cdots$

Slot in the
resource pool

Slot outside the
resource pool

Step 2: Use the bitmap
#1 to indicate a slot
that is in an NR-V2X
resource pool and that
is in remaining
available slots

FIG. 5

Time domain
interval
between two
adjacent
S-SSBs

1ˢᵗ S-SSB time domain offset

Slot for transmitting
the S-SSB

| Frame 0 | Frame 1 | Frame 2 | Frame 3 | | Frame n |

...

S-SSB periodicity 160 ms

FIG. 6

| Network device | | Terminal device |

S701: Send first
information

S702: Send second
information

S703: Determine a third time
unit set based on the first
information and the second
information

FIG. 7

☐ Slot in an NR-V2X
resource pool

▦ Slot outside the
NR-V2X resource pool

Available time unit set of NR-V2X

First bitmap ⌐1 1 1 0⌐ ⌐1 1 1 0⌐ ⌐1 1 1 0⌐⌐1 1 1 0⌐

Second bitmap
(whose length is 4) ⌐1 1 0 0⌐ ⌐1 1 0 0⌐ ⌐1 1 0 0⌐⌐1 1 0 0⌐

Second bitmap
(whose length is 3) ⌐1 1 0⌐ ⌐1 1 0⌐ ⌐1 1 0⌐ ⌐1 1 0⌐

FIG. 8

Sub-channel #1

Sub-channel #2

Slot #1

☐ For NR-V2X
transmission

▨ For LTE-V2X
transmission

FIG. 9

FIG. 10

Slot shared by
LTE-V2X and NR-V2X

Available time unit set of the
LTE-V2X and the NR-V2X

Third bitmap    1 1 0    1    1 1 0 1        1 1 0 1  1    1 0    1

First bitmap    1 1 1    0    1 1 1 0        1 1 1 0  1    1 1    0

First bitmap    1 1 1    0    1 1 1 0        1 1 1 0 1    1 1    0

FIG. 11

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 0 | 1 | 0 | 1 | 0 | 1 | 0 | 1 | 0 | 1 | 0 | 1 | 0 | 1 | 0 | 1 | 0 | 1 | 0 | 1 | 0 | 1 |

First bitmap     First bitmap

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 1 | 0 | 1 | 0 | 1 | 0 | 1 | 0 | 1 | 0 | 1 | 1 | 0 | 1 | 0 | 1 | 0 | 1 | 0 | 1 | 0 | 1 |

Third bitmap     Third bitmap

FIG. 12

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 0 | 1 | 0 | 1 | 0 | 1 | 0 | 1 | 0 | 1 | 0 | 1 | 0 | 1 | 0 | 1 | 0 | 1 | 0 | 1 | 0 | 1 |

First bitmap     First bitmap

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 1 | 0 | 1 | 0 | 1 | 0 | 1 | 0 | 1 | 0 | 1 | 0 | 1 | 0 | 1 | 0 | 1 | 0 | 1 | 0 | 1 | 0 |

Third bitmap     Third bitmap

FIG. 13

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 0 | 1 | 0 | 1 | 0 | 1 | 0 | 1 | 0 | 1 | 0 | 1 | 0 | 1 | 0 | 1 | 0 | 1 | 0 | 1 | 0 | 1 |

First bitmap

| 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|----|----|----|----|----|----|----|----|----|----|----|----|----|
| 1 | 0 | 1 | 0 | 1 | 0 | 1 | 0 | 1 | 0 | 1 | 0 | 1 | 0 | 1 | 0 | 1 | 0 | 1 | 0 | 1 | 0 |

Third bitmap     Third bitmap

FIG. 14

20 MHz
bandwidth

GP

Synchronization
resource of NR-V2X

Synchronization
resource of LTE-V2X

One time unit

FIG. 15

Communication
apparatus 1000

Transceiver unit 1100

Processing unit 1200

FIG. 16

1700

1701
Processor
Instructions
1703

1702
Memory
Instructions
1704

Transceiver
1705

Antenna
1706

FIG. 17

| INTERNATIONAL SEARCH REPORT | International application No. |
|---|---|
| | **PCT/CN2023/084621** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE, 3GPP: 时间单元, 时隙, 符号, 子帧, 新无线, 车联网, 长期演进, 车辆到车辆, 车辆到万物, 重叠, 冲突, 共享, 排除, 去除, 比特图, 位图, 侧链路, time, slot, subframe, subframe, NR-V2X, LTE-V2X, overlap, collide, collision, share, exclude, remove, bitmap, sidelink

**C. DOCUMENTS CONSIDERED TO BE RELEVANT**

| Category* | Citation of document, with indication, where appropriate, of the relevant passages | Relevant to claim No. |
|---|---|---|
| X | CN 111480311 A (SAMSUNG ELECTRONICS CO., LTD.) 31 July 2020 (2020-07-31) description, paragraphs [0038]-[0146], and figure 7 | 1-27 |
| A | CN 111615192 A (HUAWEI TECHNOLOGIES CO., LTD.) 01 September 2020 (2020-09-01) entire document | 1-27 |
| A | CN 113518381 A (HUAWEI TECHNOLOGIES CO., LTD.) 19 October 2021 (2021-10-19) entire document | 1-27 |
| A | CN 108419294 A (CHINA ACADEMY OF TELECOMMUNICATIONS TECHNOLOGY) 17 August 2018 (2018-08-17) entire document | 1-27 |
| A | US 2021314967 A1 (QUALCOMM INCORPORATED) 07 October 2021 (2021-10-07) entire document | 1-27 |
| A | MEDIATEK INC. "On In-Device Coexistence between LTE and NR Sidelinks" *3GPP TSG RAN1 WG1 Meeting #97 Reno, USA, May 13th - 17th, 2019, R1-1906557,* 17 May 2019 (2019-05-17), entire document | 1-27 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 May 2023** | **15 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

| | | | | | | | |
|---|---|---|---|---|---|---|---|
| International application No. |||||||  |
| | | | | **PCT/CN2023/084621** ||||

| Patent document cited in search report ||| Publication date (day/month/year) | Patent family member(s) ||| Publication date (day/month/year) |
|---|---|---|---|---|---|---|---|
| CN | 111480311 | A | 31 July 2020 | KR | 20190137505 | A | 11 December 2019 |
| | | | | US | 2019373427 | A1 | 05 December 2019 |
| | | | | US | 11540097 | B2 | 27 December 2022 |
| | | | | WO | 2019231303 | A1 | 05 December 2019 |
| | | | | AU | 2019278733 | A1 | 30 January 2020 |
| | | | | EP | 3662610 | A1 | 10 June 2020 |
| | | | | EP | 3662610 | A4 | 24 February 2021 |
| | | | | IN | 202037008488 | A | 04 December 2020 |
| CN | 111615192 | A | 01 September 2020 | WO | 2020168946 | A1 | 27 August 2020 |
| CN | 113518381 | A | 19 October 2021 | WO | 2021204173 | A1 | 14 October 2021 |
| CN | 108419294 | A | 17 August 2018 | EP | 3582564 | A1 | 18 December 2019 |
| | | | | EP | 3582564 | A4 | 22 January 2020 |
| | | | | WO | 2018145628 | A1 | 16 August 2018 |
| | | | | US | 2019373617 | A1 | 05 December 2019 |
| | | | | US | 11039451 | B2 | 15 June 2021 |
| | | | | CN | 108419294 | B | 21 February 2020 |
| US | 2021314967 | A1 | 07 October 2021 | None |||  |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210466656